Europäisches Patentamt

European Patent Office

Office européen des brevets

(11) Publication number: **0 398 644**
**A2**

## EUROPEAN PATENT APPLICATION

(21) Application number: 90305217.3

(51) Int. Cl.⁵: **G06F 9/445**

(22) Date of filing: 15.05.90

(30) Priority: 15.05.89 US 352074

(43) Date of publication of application:
22.11.90 Bulletin 90/47

(84) Designated Contracting States:
**DE FR GB**

(71) Applicant: **International Business Machines
Corporation
Old Orchard Road
Armonk, N.Y. 10504(US)**

(72) Inventor: **Archon, Rufus James
15904 Two Rives Cove
Austin, Texas 78717(US)**
Inventor: **Browning, Luke Matthew
309 West Mary Street
Austin, Texas 78704(US)**
Inventor: **Fabbio, Robert Anthony
8406 Saber Creek Trail
Austin, Texas 78759(US)**
Inventor: **Goal, Mean-Sang Patrick
11304 Pickfair Drive
Austin, Texas 78759(US)**
Inventor: **O'Quin, III, John Claude
3907 Berryhill Way
Austin, Texas 78731(US)**
Inventor: **Valdes, Peter Manabat
9205 Knoll Crest Loop
Austin, Texas 78759(US)**

(74) Representative: **Harris, Ian Richard
IBM United Kingdom Limited Intellectual
Property Department Hursley Park
Winchester, Hants. SO21 2JN(GB)**

(54) **Data processing system comprising system configuration means.**

(57) In the system and method of this invention, a data processing system is dynamically configured during IPL (initial program load) time. All of the entities of the data processing system, including physical and logical devices, are represented as objects in an object oriented database. The object oriented database also contains an object class of rules which define the sequence of events that are needed in order to configure the system. A number of methods are defined to perform specific functional operations on the objects. A configuration manager invokes the appropriate method to perform operations on the objects according to the rules. The objects are dynamically defined, configured, started, stopped, unconfigured, and undefined independent of whether the objects represent physical or logical entities. In this way, both physical and logical entities are configured in a consistent and similar fashion.

# DATA PROCESSING SYSTEM COMPRISING SYSTEM CONFIGURATION MEANS

This invention relates to the configuration of a data processing system.

In order for a data processing system to utilise the devices attached to it, the operating system must be aware of the devices which are attached to the data processing system. The devices and components attached to a data processing system are referred to as its configuration environment. A known operating system is the UNIX operating system. The kernel of the UNIX operating system is built in a way such that the relationships between the device drivers in the kernel and the IPL process are very static. At IPL time, a system can determine what physical entities are attached to the system but cannot dynamically reflect this knowledge in the kernel. The user of the data processing system has to know what physical devices are attached to the system, and indicate the configuration in a static fashion; thus making the kernel aware of any changes (additions or deletions) to the physical devices that were attached to the system. The user then has potentially to rebuild the kernel and reboot the system in order to make the system resources available. Moreover, this process did not accommodate the configuration of logical entities (not real devices) in a fashion similar to that used for the physical real devices.

As described in U.S. Patent 4,649,479, the new devices are statically defined within the files named /etc/master and /etc/system to represent the UNIX system configuration. When a user modifies this device configuration, the user has to re-IPL the system in order to make the kernel aware of these configuration changes. The problem with this methodology is that the dynamics of the configuration are not reflected. More importantly, the user is required to understand the format and semantics of the UNIX system configuration files in order to properly reflect the state of the configuration.

The configuration process is therefore tedious for a user. To configure real physical devices, a user has to shut down the machine to add the adapters and the devices, power the machine back on, modify the configuration files to inform the kernel that these new physical devices have been added, rebuild the kernel so that the kernel has the appropriate information and device drivers to interact with the new devices, and then re-IPL the system. This requires the user to have specific knowledge as to how to perform these tasks. These procedures are more complex than should be required of a casual user who desires to change the physical devices that are attached to the system. Moreover, the process does not address the real problem; namely, configuring any entity into the system (whether it be logical, pseudo, or real) automatically, in addition to defining the complex interrelationship between entities.

Therefore in accordance with the present invention there is provided a data processing system comprising, for configuring the system,
means for representing a plurality of entities, having attributes, of the data processing system as a plurality of objects stored in an object oriented data base,
means for defining a plurality of methods associated with the objects and
means for invoking the methods to perform at least one operation on the objects independent of the attributes for dynamically configuring the data processing system.

The invention enables the configuring or IPL process to deal with abstract objects in order to configure both physical and logical entities in a consistent and similar fashion. The objects may be dynamically defined, configured, started, and stopped independently of whether they represent physical or logical entities.

Thus, in accordance with a preferred feature of the invention the means for representing the entities further comprises means for representing at least one physical device and at least one logical device of the data processing system.

In accordance with another preferred feature of the invention the system further comprises means for dynamically updating the object database with at least one definition of the plurality of objects and with information of at least one connection between the objects wherein a reboot of the system is avoided.

In accordance with another preferred feature of the invention the means for invoking the methods performs at least one operation on objects for dynamically configuring the system when the system is booted.

In accordance with another preferred feature of the invention the system further comprises means for representing a topology in the object oriented database of at least one connection between the plurality of objects and traversing the topology of the objects to configure the objects of the data processing system.

The relationships between the objects are thereby represented in order that the IPL process can properly reflect the dynamic nature of the system.

According to another preferred feature of the invention the attributes define a plurality of physical device entities and logical device entities of the data processing system.

According to another aspect of the invention there is provided a procedure for configuring a data processing system; the procedure comprising:

representing a plurality of entities, having attributes, of the data processing system as a plurality of objects stored in an object oriented data base;

defining a plurality of methods associated with the objects; and

invoking the methods to perform at least one operation on the objects independent of the attributes for dynamically configuring the data processing system.

According to a preferred feature of this aspect of the invention the step of representing the entities further comprises representing at least one physical device and at least one logical device of the data processing system.

According to another preferred feature the methods are invoked for dynamically configuring the data processing system when the system is booted.

According to another preferred feature of this aspect of the invention the procedure further comprises the step of representing a topology in the object oriented database of at least one connection between the plurality of objects and traversing the topology of the objects to configure the objects of the data processing system.

The invention thereby enables a dynamically configurable system to be provided for minimizing IPLs and kernel rebuilds for the purpose of representing the system configuration; taking advantage of the dynamic binding/unbinding of device drivers to/from the kernel during IPL.

In this way kernel extensions, e.g. device drivers, can be loaded into the kernel of the operating system dynamically without rebooting the kernel. In addition, the invention allows for the generic definition of the objects through the use of an object oriented database. At IPL time, objects are viewed as both logical and physical entities. This allows the configuration of devices that represent real devices physically connected to the hardware, in addition to logical devices such as a logical volume manager, and networks such as TCP/IP which relate to and manage the physical entities.

There can be provided therefore a data-driven system so that its behaviour is easily tailored to various client-specific environments. In addition, the invention enables an extensible system to be provided in which new devices are easily added.

The configuration procedure is centred around the ability to categorise system configuration entities into two distinct graphs: a container graph, and a connection graph. The connectivity graph depicts the connectivity between the physical entities and their dependencies on logical entities. The connection information describes both nodes (devices) in the graph and their edges (the connection name space) between each node. The container graph represents containment of devices. For example, physical entities (cards) may have multiple logical devices (adapters) associated with them. This methodology provides a mechanism to reflect which entities are contained by which.

The connectivity and containment graphs represent the relationships between entities, their dependencies, and which entities are contained within other entities, regardless of whether the entities are physical or logical entities. Furthermore, these entities are represented as objects through an object oriented database. The object data manager provides support to associate the appropriate methods to the specific objects. The notions of a method is the operation or sequence of events needed in order to perform the specific operation on the specific object (e.g. configure, unconfigure, start, stop, etc.). Thus, using an object oriented database to represent the relationships among the objects (the graphs), and the association of methods to those objects, the IPL process can configure logical and physical entities dynamically.

A configuration manager runs when the system is booted. This configuration manager is rule based; it understands the sequence of events needed to define and configure such objects at IPL time. The system of this invention automatically detects each device in the system by taking advantage of the Microchannel and SCSI architecture. Each new device is automatically added as an object in the object oriented database; showing its relationship to other objects. This is accomplished by the configuration manager invoking the appropriate methods based on the devices detected. With this technique, at the end of IPL time, the kernel knows automatically what hardware is present and can immediately interact with the hardware without any user interaction.

By determining what devices are attached to the system, and viewing both physical and logical devices as objects in an object oriented database, an IPL process is created that automatically configures the physical and logical entities within the system during the initial program load. In this way, the kernel is built dynamically, at the time of IPL, containing those device drivers (kernel extensions) needed to communicate with the physical and logical entities.

An embodiment of the invention will now be described with reference to the following drawings wherein,

Fig. 1 is a block diagram showing how the components of the IPL/Configuration process fit together.

Fig. 2A is a flow diagram showing the IPL and configuration process.

Fig. 2B is a flow diagram showing the execution of phase 1 of the configuration manager.

Fig. 2C is a flow diagram showing the second phase of the configuration manager.

Fig. 3 illustrates the structure of the predefined configuration information in the configuration database.

Fig. 4A shows the container graph and the devices graph for grouping system configuration data.

Fig. 4B shows the devices graph for grouping system configuration data.

Fig. 4C shows the container graph for grouping system configuration data.

Fig. 5 illustrates the structure of the customised configuration information in the configuration database.

Fig. 6A is a flow diagram of the define method.

Fig. 6B is a flow diagram of the configure method.

Fig. 6C is a flow diagram of the start method.

Fig. 6D is a flow diagram of the stop method.

Fig. 6E is a flow diagram of the unconfigure method.

Fig. 6F is a flow diagram of the undefine method.

Fig. 7 shows the configuration rules objects.

Fig. 8 is a device status state transition diagram.

Some of the terminology that is used herein is defined as follows.

Adapter is a shorthand definition for a device attached to an I/O bus.

Configuration manager is a program to supervise device configuration during IPL.

Container is a field replaceable unit (FRU) which contains other devices or containers. These are passive entities like drawers and boards (cards), e.g. native I/O (NIO) card. For example, expansion box is a container which may contain several adapter cards. Although container is not a device per se, it is represented in a way similar to that of a device. A container can also have methods for its configuration. For each real device, there exists a relationship (called containment) to container for the purpose of determining the relation between the replacement unit and the device. Container is also the object class name for the actual FRU information.

Customise is the set of object class(es) name for the actual devices information.

Devices are active entities like logic, connectors, and wires. Throughout this document, the term devices is used in a generic sense. It refers to devices which can further physically connect other devices (e.g. adapters, bus, etc.) called multiplexor, and to devices which cannot further connect other devices (e.g., printer, disk, displays, etc) called terminal devices, and to software-oriented devices (e.g., hft, pty) called pseudo devices.

Device configuration refers to a series of steps performed to make a device known and usable in the system. Some of the steps may involve detecting the actual presence of the device to be configured, defining the device in the configuration database, building a data structure needed to initialise the device driver, loading the device driver and initialising the device driver, and enabling the device, etc.

Dynamic configuration refers to the following capabilities in the system: detecting the device state changes, being able to dynamically bind/unbind device drivers from the kernel both during IPL and runtime, being able to configure the system despite changes in the interconnections in the underlying hardware, and being able to configure a device during runtime without necessitating an IPL nor a kernel rebuild.

Multiplexor is a device which further connects other devices. For example, SCSI adapter is a multiplexor which can further connect terminal devices like disks, printers, displays, etc. A bus is another multiplexor which can connect adapters on its slots.

Predefine is a set of objects which define all possible logical and physical devices available for use by the system, referred to herein as the "universe" of all devices possible for configuration.

Pseudo devices are logical devices as opposed to physical or hardware devices. Pseudo devices are non-hardware devices implemented in software. These pseudo devices can be multiplexing (e.g. system console) or terminal (e.g., pty, error) devices. Certain types of pseudo devices (e.g. pty - a pseudo terminal device) behave like real devices and therefore are managed in this embodiment during IPL.

Terminal devices are devices which are not multiplexors and do not allow other devices to be physically connected to it (e.g. terminals, printers, etc.).

The present embodiment provides a system and method for configuring the configurable domain known as devices, including both real and logical devices. The system of this embodiment automatically detects each device in the system by taking advantage of the Microchannel and SCSI architecture.

The method of this embodiment identifies the set of objects that are representative of the devices configurable domain. Two distinct events cause the database to represent the collection of objects making up the devices configurable domain. The collection of objects are defined at either IPL time or through a set of runtime interactive services. This embodiment reflects the events that occur at IPL time.

The system and method of this embodiment dynamically defines, configures, starts, stops, undefines, and unconfigures the objects representing the physical and logical entities within a data processing system. The kernel is dynamically provided with the knowledge of all objects attached to the system during IPL, such that the operating environment is representative of the physical and logical entities available to the end user of the data processing system. The IPL process of this system does not differentiate between physical and logical entities; but rather, deals with objects in a abstract sense.

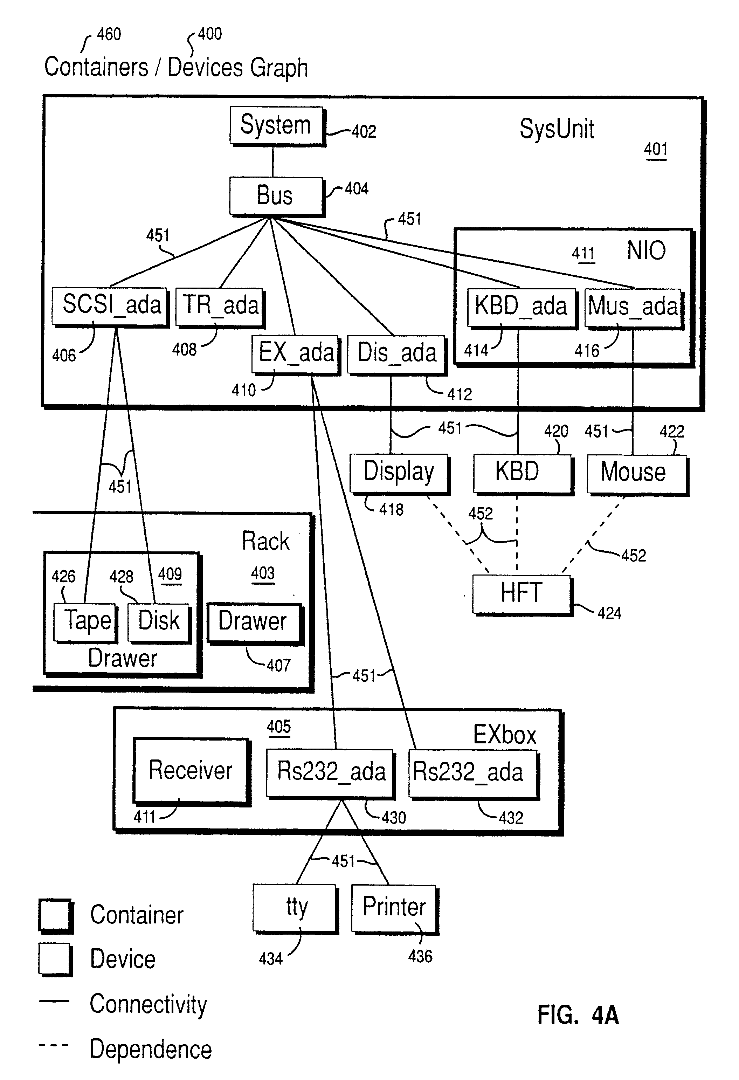

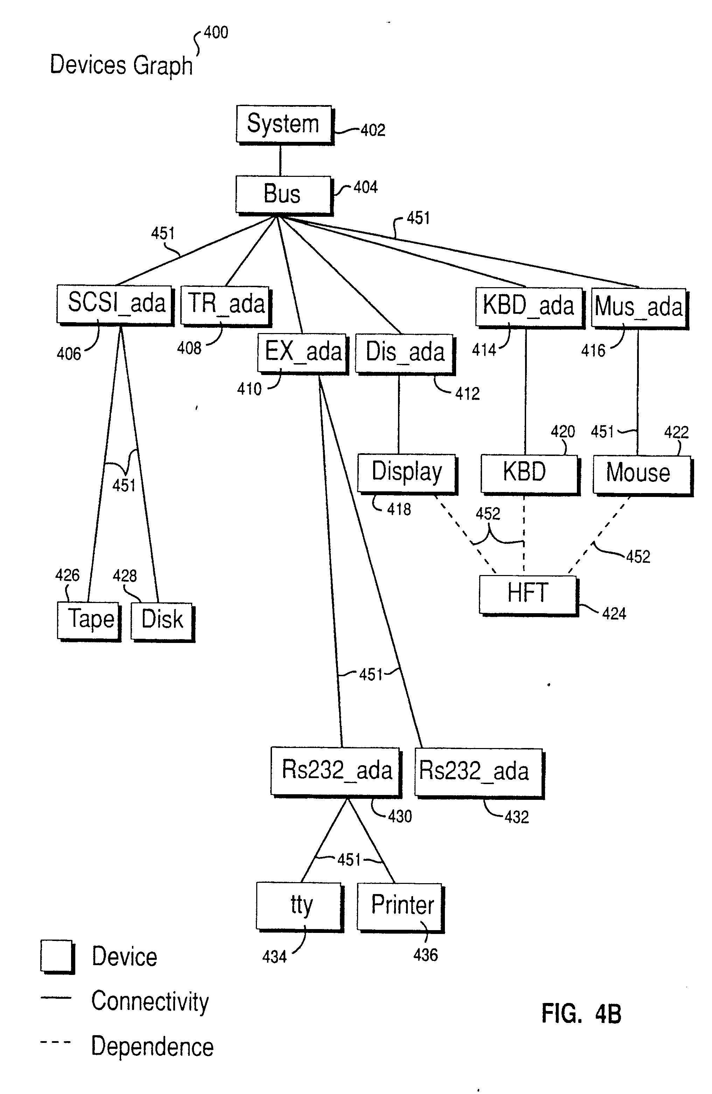

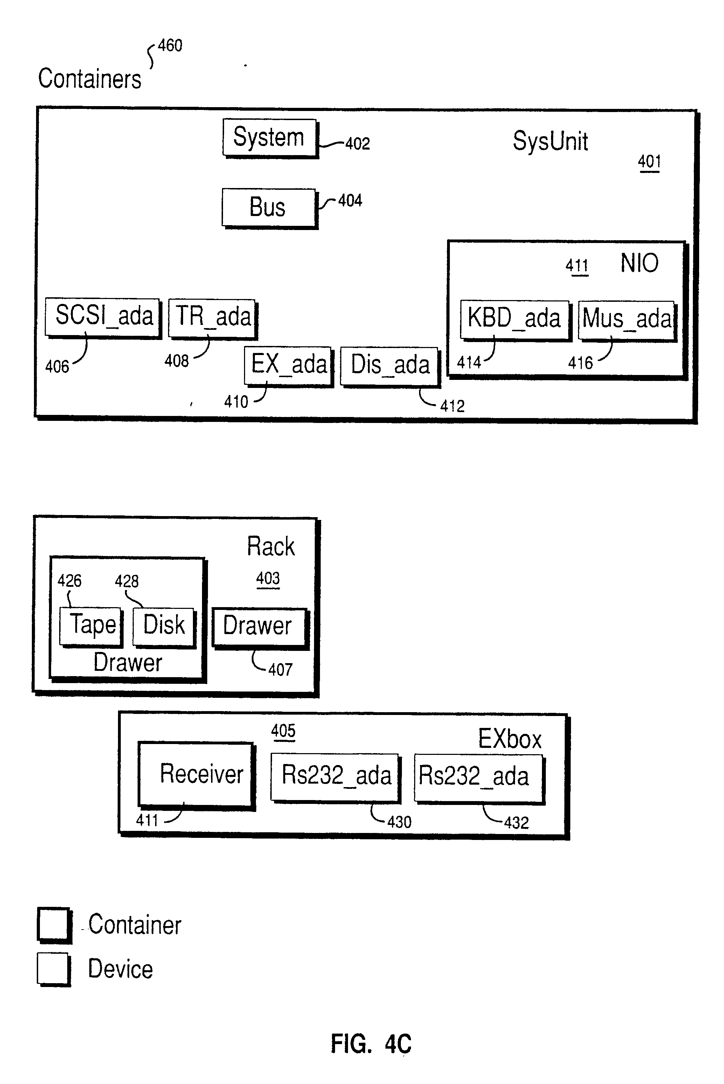

The configuration process employed is centred around the ability to group system configuration data into two distinct graphs: a container graph and a devices graph, as shown together in Fig. 4A. Fig. 4B shows the devices graph separately, and Fig. 4C shows the container graph separately.

The devices graph 400, Fig. 48 interconnects real and pseudo devices. The devices graph depicts the connectivity between physical devices, the dependence between logical devices and physical devices, and the dependence between logical devices. The solid line 451 shows connectivity, and the dotted lines 452 show dependence. The devices graph depicts specifically the configuration data that describes both the nodes (devices) in the graph and their edges (connection name space) 451, 452 between each node. There are basically three types of devices that are represented with these graphs: 1) a multiplexor device, such as a bus 404, a SCSI adapter 406, a RS232 adapter 430, etc., 2) a terminal device such as a terminal, disk 428, printer 436, etc., 3) a pseudo device such as a high function terminal 424, pty, etc.. It is assumed that all devices fall into one of these three types. Therefore, the way in which the data is represented is simplified due in part to the general structure that accommodates those three types of devices. The fundamental difference is that each multiplexor device 404, 406, 430, must by described in terms of its connection name space 451 as a means of representing how to communicate to it. By contrast, terminal devices 426, 428 that do not have a name space per se, only have characteristics which need to be represented along with their relationships to the multiplexor devices they are attached to. Pseudo devices have the characteristics of either a multiplexor device or a terminal device.

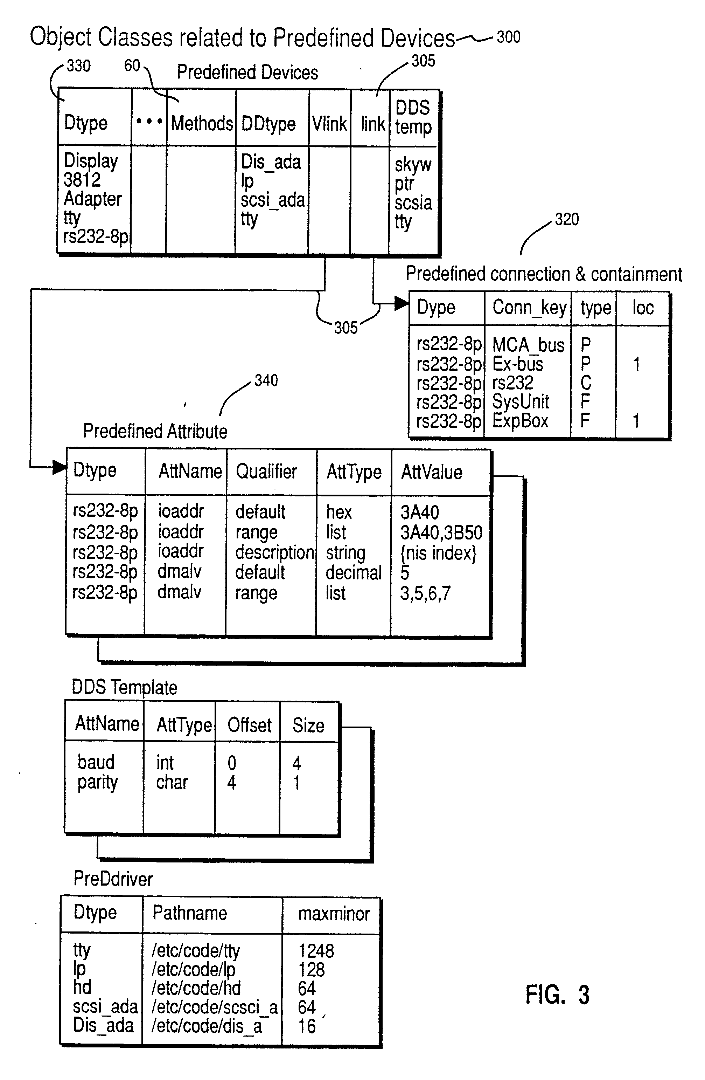

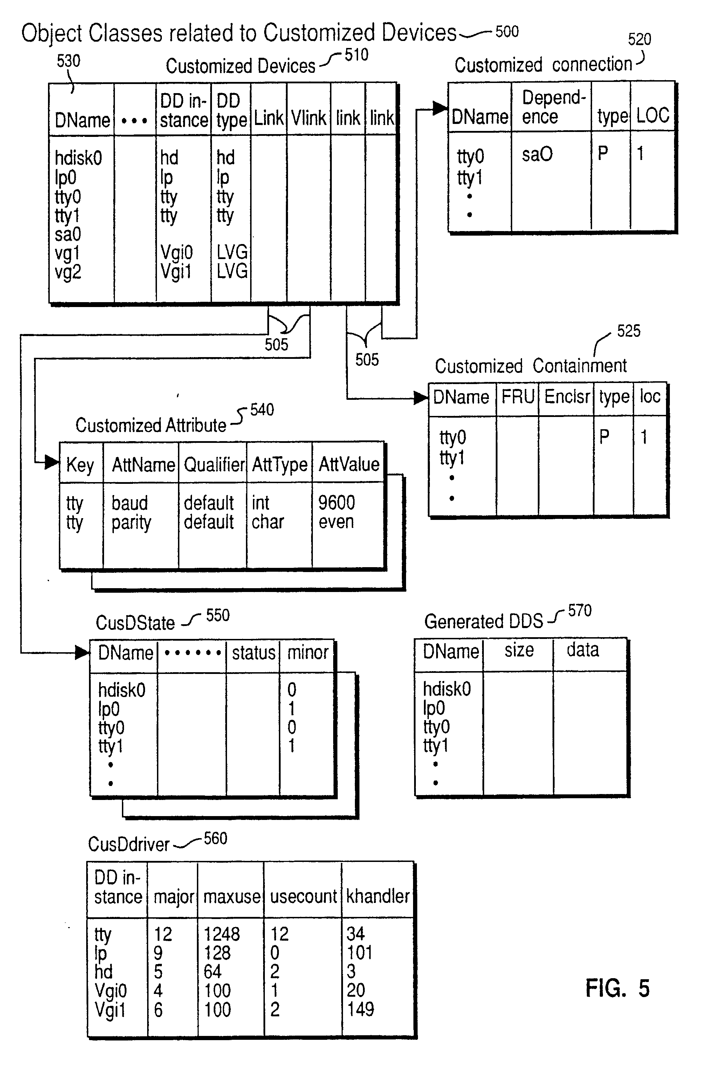

The devices graph 400 (Fig. 48) is represented by a number of object classes. Two main classes, however, serve as the core of all of the devices information; the predefine object class 300 (Fig. 3), and the customise object class 500 (Fig. 5). The predefine object class 300 (Fig. 3) serves as the template for all possible device configurations, their connections, default values, and choices. The customised object class 500 (Fig. 5) is made up of a set of appropriate predefined objects tailored to represent the actual device configuration.

The container graph 460 (Fig. 4C) represents the containment information for the purposes of field replacement. The container graph shows the hierarchy of replaceable units and their relationship to each other. The relationships represented will not be a single tree, but rather a collection of trees 401, 411, 403, 405. At each node in the devices graph, there exists a relationship to the container graph for the purpose of determining the relationship between the replaceable unit and the device connected to it, and vice versa.

The container graph 460 (Fig. 4) is represented by object classes similar to object classes used to represent device graph. The predefine object classes 300 (Fig. 3) for container serve two fundamental purposes: 1) it is a repository of all valid hardware configurations similar to the predefine object class for the devices graph, and 2) it provides a mapping between the container information and the devices information. The predefine container object class(es) 320 represents the relationship between the container graph 460 and the devices graph 400. The customised container object class 525 (Fig. 5) serves as the repository for the actual container information represented as a number of trees. The container object class is merged into customised device object in the customised configuration database. Objects representing logical devices do not have containment information.

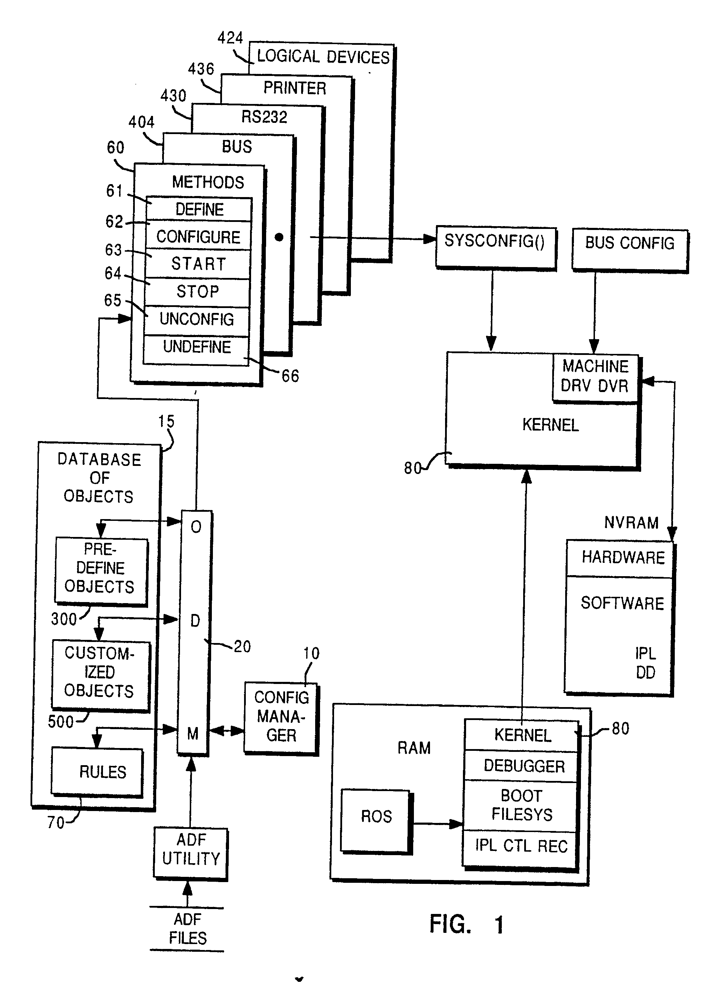

With reference to Fig. 1, the configuration database 15 (Fig. 1) stores all information relevant to support devices configuration. In addition to device related information, the configuration database contains configuration rules 70 which guide the configuration manager in performing device configuration. The configuration data base is accessed through the object data manager 20 which always groups the representation of configuration information as a set of object classes 300, 500.

The configuration database 15 contains both predefined 300 and customised 500 devices configuration information as further shown with reference to Fig. 3 and Fig. 5. The predefined information 300 (Fig. 3) contains configuration data of all possible devices and containers supported by the system. A supported device has a predefined device object 330 in the configuration database. Information in the configuration database is interrelated via links 305 (Fig. 3) in the object data manager. The customised information 500 (Fig. 5) contains configuration data of actually defined or configured devices in the system. The set of object classes making up the configuration database 15 is not limited to devices configuration information. It contains other special object classes such as configuration rules 70, objects supporting spooler subsystems and backends, objects supporting filesystem - logical volume manager configuration, objects supporting network configuration, objects supporting licensed program product configurations, objects supporting kernel configuration, objects supporting diagnostics, etc.

The customise object class 300 represents the common pieces of information for all devices. For each device object, there is a set of methods 60 which will perform specific operations on each object, such as define 61, configure 62, start 63, etc. These methods will be specific to the particular object and the type of device it is representing (e.g. scsi_define, scsi_config, scsi_start, scsi_stop, rs232_define, rs232_config etc.). For each device a relationship 505 (Fig. 5) will exist to the device dependent information represented as an attribute object class 540; a relationship 505 to the state information 550 for the given device; and depending upon the type of device, a relationship to the connection object class 520 which defines its connection name space. In addition, depending upon the type of device, a relationship 505 may exist to a containment object class 540 which defines its containment information. For each device with a device driver, there also exists a device driver object class 560 which defines the characteristics of the device driver.

Referring back to Fig. 1, the configuration manager 10 is further described. The configuration manager 10 operates on those objects which are defined within the predefined class(es) 300 (Fig. 3), and those found in the customised devices objects class(es) 500 (Fig. 5). The predefined devices 300 represent the "universe" of possible objects which can be configured on the system, and the customised devices 500 represent the actual customised set of devices being used from that "universe". The configuration manager 10 accesses the customised objects 500 to verify that the physical entities which have been found in the system, at IPL time, are represented. If a physical entity is found but not reflected in the set of customised objects 500, the configuration manager 10 access the predefined devices objects 300, to find an object of the same type, and invokes its define method 61. The define method 61 defines an object instance from the predefined class 300 and represents it in the customised classes 500 with all of the appropriate attributes. Once this physical entity has been defined to the set of customised object classes, the physical entity has been defined. The kernel and the filesystem have to be informed that the physical entity exists. This involves the dynamic binding of a device driver into the kernel and the creation of the special files. The configuration manager 10 invokes the config method 62 for that particular physical entity represented by a specific object. The config method 62 for the objects performs the operations necessary to inform the kernel 80 and filesystem that a particular object exists. The config method tells the kernel to load a device driver for that object. The config method 62 queries the customised device object 500 for the object (defined by the define method 61), creates the device dependent structure or information that is passed to the device driver, issues the appropriate low level device commands or routines to acquire a major number and a minor number, and issues system calls to bind the device driver into the kernel and initialise it using the device dependent information. Using the device driver information, specifically the major number, the device driver is bound into the kernel through the device switch table. The configuration manager uses the connection information for these devices attached to it. If the configuration manager is configuring an adapter, the adapter may have other devices that are attached to it. The config method 62, also for multiplexing devices, finds those attached devices and insures that those attached devices are defined in the customised database 500 by invoking their define methods 61. The config method 62 therefore invokes other define methods 61 for those objects that are attached to it. This process is responsible for populating the database with the connection information; specifically establishing and maintaining the connection graph 400 (Fig. 4B).

With reference to Fig. 1, the configuration manager 10 is a small, simple program which is driven to a great degree by the device objects 300, 500 and associated methods 60 in the object oriented database 15 which is managed by the object data manager 20. The configuration manager 10 is ruled based in that it understands the sequence of events which are needed in order to configure a system which is represented as a collection of objects 300, 500. In addition, the configuration manager 10 is cognizant (from its rules) of the dependencies on the different types of objects relative to a configuration order. The rules governing the configuration manager 10 are defined in a rules object class 70. The rules are found in the config_rules object class and are accessed using the object data manager 20 which provides an object oriented database facility.

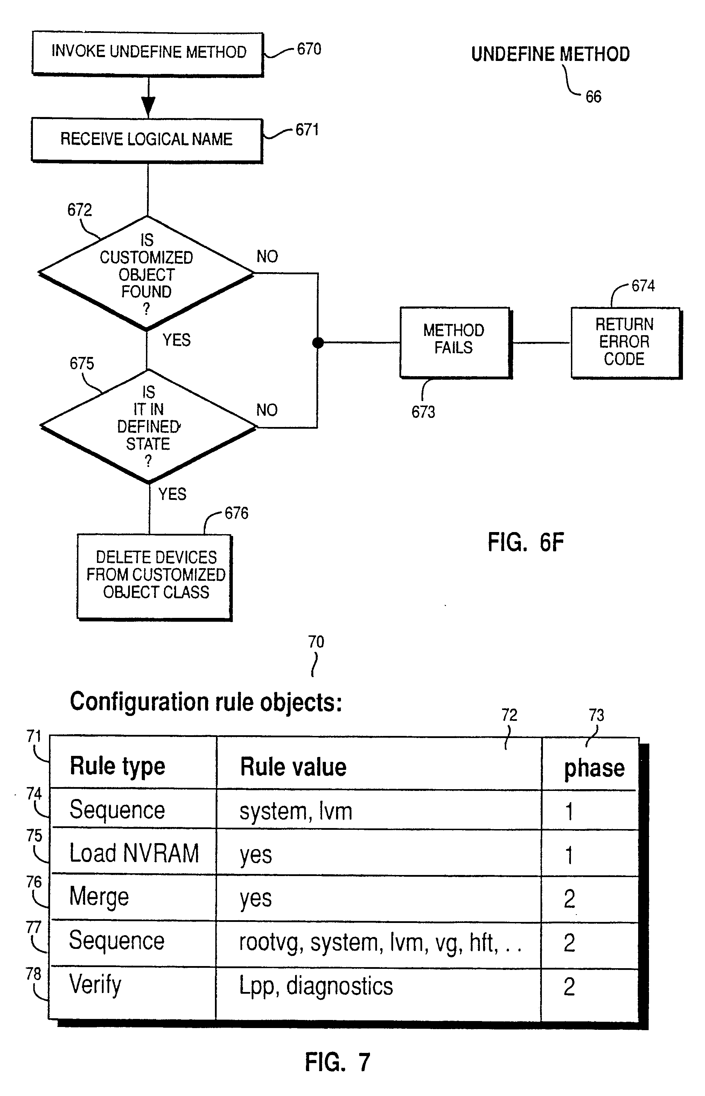

The configuration manager 10, when invoked, will open a config_rule object class 70, Fig. 7, and read config_rule objects to determine what to configure and in what order. The config_rule will provide generic rules that will guide the configuration manager through its processing and dictate policy. In addition, the config_rule may contain other pieces of information, e.g. policies on whether to run diagnostics before IPL, what special devices need to be configured and when to configure them, whether to automatically resolve resource conflicts without users confirmation (default will be to automatically resolve conflicts), etc.

The configuration rules of the configuration manager are as follows. The Apex rule informs the configuration manager that all the devices on the system can be viewed as elements of a graph structure 400 as shown in Fig. 4B. The configuration manager takes the specified device as an apex and traverses through to the bottom of the graph structure to configure all elements in the graph.

The Sequence rule is as follows. In addition to the tree structure for real devices, there are clusters of many nodes. Each node type is a group of logical devices with a particular interrelationship. For example, node types are: HFT types, IF types, TCP types, PTY types, etc. This rule tells the configuration manager what are those node types and the priority sequence between these node types. The configuration manager refers to this rule when there is no sufficient customised information to instruct the configuration manager when to configure a node type. When the node type is for a logical device, the configuration manager always runs the Define method to define dependencies in the connection object class for the device. The seguence rule informs the configuration manager what devices need to IPL'ed and in what order. There is a first phase sequence rule which tells the configuration manager to configure all base real devices, e.g. hard disks, floppy disks, LEDs, keyboard, etc. Base devices are those devices that are necessary to get the system up. To configure means to bind the appropriate device drivers for those base real devices into the kernel. The second phase sequence rule tells the configuration manager to configure a volume group, sys, other volume groups, HFT, TCP/IP, etc.

This rule configures all of the volume groups that are in the system, e.g., the volume groups in the multiple physical disks. Volume groups oversee physical disks, therefore, volume groups are logical entities. Sys includes non base real devices, e.g. printers, terminals, etc. Other volume groups includes a high function terminal which is a logical device which managers or controls the mouse, console, light pen, etc. These are real devices but they are all managed by a logical device called the HFT. There could also be a logical device in the network known as TCP/IP which runs over a physical device known as token ring. Once the real devices are configured, the logical devices that control the physical devices can be configured. Therefore, the configuration manager takes the sequence rules and traverses through the different types of configurable nodes. The configuration manager then dynamically loads all of the configurable devices into the kernel, and updates the database to reflect the current state of the system. The Verification rule informs the configuration manager that there may be a need to invoke a diagnostic facility or to verify a program product or a device before IPL is finished. This rule informs the configuration manager whether to invoke the diagnostic or the verify routines.

The merge rule informs the configuration manager whether to merge boot image on ramdisk with root filesystem. The NVRAM rule informs the configuration manager whether to load customised device objects from NVRAM or start the system configuration from scratch.

Fig. 7 illustrates the configuration rule objects 70. The configuration rules set of objects contains a rule type 71, a rule value 72, and phase of IPL 73. For the rule type of sequence 74, for the first phase of IPL, the configuration manager is to configure the system and the logical volume manager. The system is the physical entities, and the logical volume manager is a logical entity. In the first phase of IPL, the configuration manager is also suppose to load any configuration information from a prior IPL from NVRAM into memory according to the rule type Load NVRAM 75. The rule type merge 76 states that after the first phase of IPL, any new information is to be merged into the old configuration. The first phase configures the minimal number of objects in order to bring a pager in and the real operating system. The second phase brings in and configures all of the other customised objects. Therefore, there are more entities 72 listed in the seguence rule 77 for the second phase of IPL. These include configuring the root volume group, i.e. disk, configuring all of the physical devices of the system, the logical volume manager, the logical entities of the volume group, hft's, and networks. The rule type verify 78 indicates that at the end of the second phase of IPL, the configuration manager is to verify that the software (LPP, licensed program product) is good, and verify that the machine is good through diagnostics.

Methods 60 (Fig. 1) are programs, scripts, or processes which perform a function based on a condition. The object data manager 20 provides an environment whereby one or more methods 60 may be invoked, when requested in this case by the configuration manager, to perform specific functional operations. The devices object class 300 has a number of methods defined such as define 61, configure 62, start 63, stop, etc.. For each method descriptor, there is code which performs a function named appropriately, i.e config method performs the configuration process on an object. The methods indicate the state of the object: defined, configured, or started, following their invocation.

Methods return either a 0 or -1 to indicate its success or failure. When success, methods may write information to the stdout buffer. When a failure occurs, the methods write error conditions and codes to the stderr buffer to indicate the error. For example, some error codes may be 0 for success; 1 for failed, diagnostic problems; 2 for failed, define code failed; 3 for failed, define device failed; etc. It is the responsibility of the caller to check for these return codes as they are returned from each intermediate stages of the method.

The customised object class 500 (Fig. 5) utilises its methods to define, configure, and start a device. In general terms, the methods will provide the following functions.

The define method 61 gets the appropriate object from the predefined object class 300 (Fig. 3) and adds it to the customise object class 500 (Fig. 5). The general rules for the define method are 1) if it is not defined, add the object, accepting inputs to override the default settings, 2) if it is defined, accept inputs to change its attributes. The define method runs a verification procedure across all devices of that particular class and type to ensure that there is not a conflict with the settings that have been defined in customised devices 550. Generally, the only time a define method is invoked is when no customise objects exists, e.g. a new system, or a device is found which is new to an existing system.

The configure method 62 will make the particular device known to the operating system by retrieving or building the define device structure (DDS) 570 (Fig. 5) from the customise object class, binding, initialising the device driver, and setting the configure flag in the customised object. As part of the configure method, it will extract hardware specific data, i.e., serial number, which should be updated in the customise object class if it does not exist or is not accurate. Prior to querying for attached devices, microcode is loaded into the device. In addition, the configure method updates the LEDs with the appropriate code for that particular stage of configuration. If a device is either new or missing, the configure method will set the config change flag to indicate the configuration change. For multiplexor devices, the configure method will also query the device for the devices that are attached to it, and will invoke the define method for those attached devices if the device has not already been defined in the customise device object class 500.

The change method will make changes for the particular device after it has been customised. Depending upon the device, the change method may call ioctl, commands, or methods (e.g. unconfigure, define, and configure) to perform its function.

The start method enables the communication to associated applications or controlling subsystems for the device, and sets the start flag in the customise object.

The unconfigure method performs operations such as unloading the device driver from the kernel and setting the config flag appropriately to indicate that the device is not configured. In some cases this may further require the removal of the /dev entry from the filesystem. This method is used by diagnostics when it is found that the configuration has changed.

Other methods include the stop method and the undefine method. The stop method disables the communication to associated applications or controlling subsystems, and resets the start flag in the customise object for the device. The undefine method deletes the devices from the customise object class. If a device is not found in the customise object class 500, it has not been defined to the system.

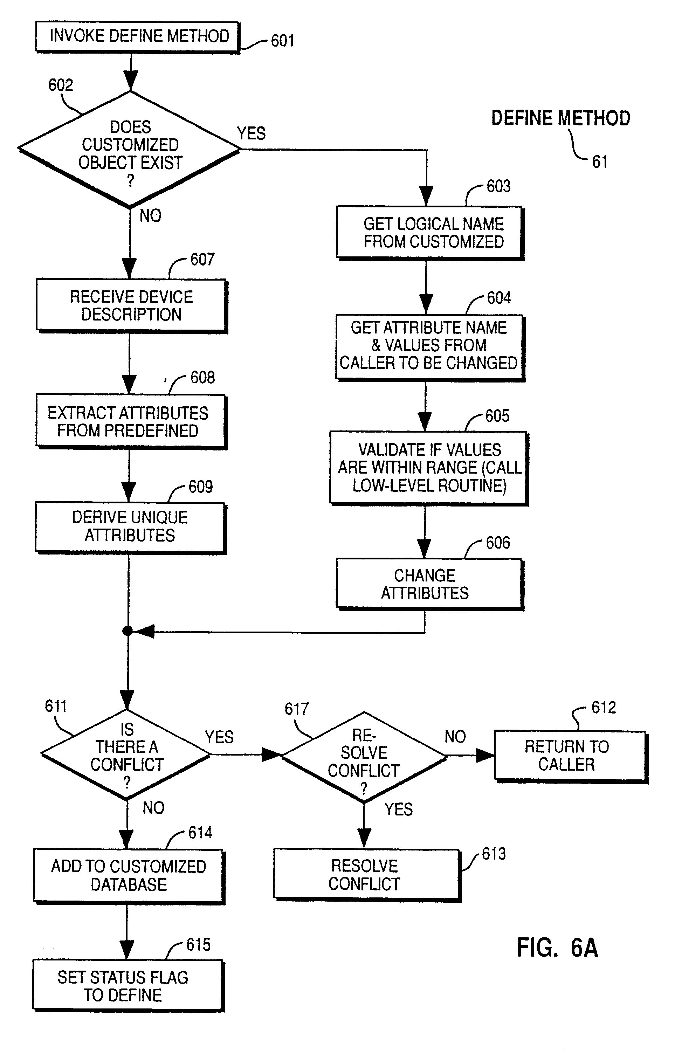

With reference to Fig. 6A - 6F, a more detailed description of the above methods is as follows.

The Define method 61, Fig. 6A, is invoked to create a customised device object for a given device. The device customisation process involves creating an instance of predefined device object, extracting among other things relevant information from the predefined object, detecting/resolving conflicts between the extracted attributes and the attributes of existing customised objects, and storing the resultant information in the created customised device object.

The define method also involves deriving the necessary information unique to the device instance. Some of this necessary information is the logical name of the device instance (which is also the name assigned to the Customised device object), and the device instance's associated connection and location information.

The steps followed by the define method are shown in Fig. 6A. When invoked, step 601, the define method is passed with a device description (i.e., a combination of device class, device subclass, device type, and where the device is connected to), or a logical name. A device description is passed, step 607, if the define method is invoked to create a customised device object from an associated predefined device object, step 602. A logical name is passed, step 603, if the customised device object is already created in the database and the define method is invoked to change existing attributes on the customised device object.

The define method associated with a specific device knows which attributes of the customised device object can be extracted from the predefined database, step 608, and which attributes should be derived unigue to the customised device object, step 609. The attributes of the customised device object may include, among other things, the connection and device information, and asscciated device driver information.

The define method accepts a list of attribute name - attribute value pairs from the caller so that users can specify desired attributes or attributes to be changed for the customised object, step 604. The define method is responsible for validating whether the caller supplied attribute values are within range, step 605. Generic low-level attribute validation routines help define methods validate device object attributes. The attribute value validation process may necessitate consulting those object classes in the predefined database housing valid options for given device attributes.

In deriving the unique attributes of a customised device object, step 609, as well as in validating caller supplied attribute values, step 605, the define method verifies that the derived/supplied attribute values do not conflict with existing customised device objects. The define method knows which specific attributes can conflict with other customised objects. The actual conflict detection process is done by a special low-level command or routine (such as busresolve and attval).

If the derived/supplied attribute values result in conflicts with other related customised device objects, then the define method provides two options, step 617: a) an option to immediately return to the caller and reporting back the nature of the conflict (via the appropriate error code), step 612, and b) an option to actually resolve the conflicts, step 613. Again, the actual conflict resolution process can be done by a special low-level command or routine. The conflict resolution process should fail if there is no feasible value available for an attribute. If conflict resolution fails, the define method returns the appropriate error code to the caller.

The define method accepts an IPL/runtime flag indicating that conflicts have been resolved, thus to skip the procedure of conflict resolution. This may occur during IPL when busresolve has been called by the bus configure method to resolve conflicts between adapters, and then adapter define methods are called to define adapters.

The define method commits the created customised device object in the database only after the successful completion of the conflict resolution process, step 614. The status flag of the customised device object is set to 'defined' state by the define method after the object is created, step 615.

The define method provides an option to the caller to allow multiple device objects created on the same connection address. A connection address is the description of where the device is connected to. For example, user can define more than one device object connected to the same device connection address and configure only one of them. For physical devices, define methods accept device names of enclosure devices and generate containment information in the customised database. Define methods for logical devices provide additional capabilities like inferring their dependencies from the customised database and defining appropriate logical device instances. Define methods for logical devices will always be run by the configuration manager at IPL time.

The define method defines all of its dependencies and puts them in the connection object class for all instances of that device type. For new physical devices found in subsequent IPLs, new logical dependencies for the new physical devices are added by the define method. In addition, the logical device object is defined to the customised database.

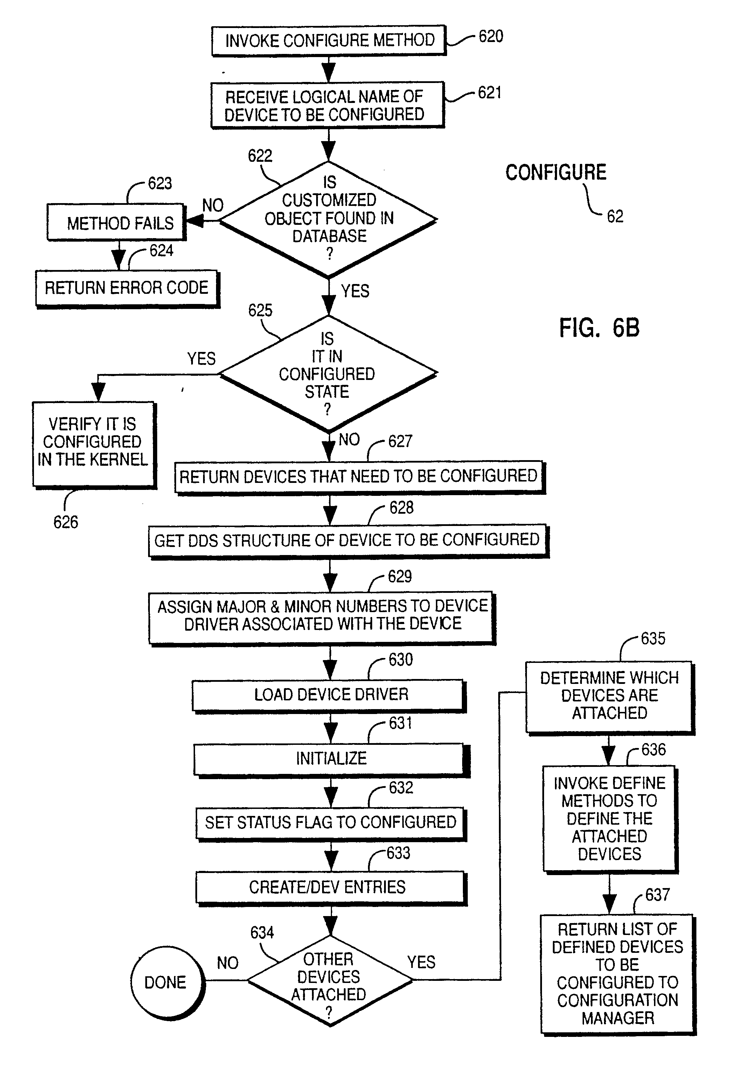

The configure method 62, Fig. 6B, is invoked to perform three basic functions: First, to prepare the device driver associated with a given device so that users can start talking to the device via the device driver; second, to extract information related to the device; third, to prepare the definition of to-be-configured devices attached to or dependent on the given device.

The device driver preparation process includes:

1) Getting a DDS structure for the given device to be configured. The DDS (Define Device Structure) is information that is created to initialize the device driver associated with the given device. The DDS for a given device may be built by joining its DDS with the DDS of the devices that the given device depends on.

2) Assigning major and minor device numbers for the device driver associated with the device.

3) Loading the device driver if not already loaded.

4) Initialising the device driver with the appropriate DDS structure for the specific device instance.

5) Creating the appropriate/dev entries, also known as special file, if needed.

After completing the above steps, the device is ready for use as far as the device driver is concerned.

If the given device to be configured has other devices attached to it or depend on it, then additional steps are taken by the configure method to prepare the definition of devices actually attached to the given device. The preparation process involves:

1) Inquiring via the driver of the given device (if feasible) as to what devices are actually attached.

2) Defining the detected devices (if not already defined) in the customised database by invoking the appropriate define methods.

3) Querying the customised database (i. e., the connection object class) as to what devices are attached to or depend on the given device.

4) Returning to the caller (i.e., configuration manager) a list of devices that are already defined and need to be configured.

With reference to Fig. 6B, the steps for the configure method are described as follows:

When invoked, step 620, the configure method is passed with the logical name of the device to be configured, step 621. If no customised device object is found in the database with the given logical name, step 622, then the method fails, step 623 and returns the appropriate error code, step 624. If the configure method is called and the customised device object is already in 'configured' state, step 625, then the method verifies that the device instance is, in fact, already configured in the kernel, step 626. Otherwise, the method queries and returns devices that need to be configured, step 627.

When invoked, the configure method is passed with a flag indicating the system is in IPL phase or runtime. The configure method only displays a check point on LEDS for the configuring device during IPL. This LEDS display is used to tell users which device is currently being configured and is used to show users the configuration status of the system.

The configuration method verifies that the device (parent device) that the given device attaches to or depends on is in "Configured" state, and that no other device is configured for the same connection address.

If the device has an associated device driver, the device driver is loaded and initialised by the configure method. It is also the responsibility of the configure method to get the DDS structure for the device driver, step 628. The device driver to be loaded (i.e., device driver type) is inferred from information recorded in the customised device object. If the device driver is not yet loaded, then the configure method loads it via the sysconfig () system call. Given that the device driver has been loaded, step 630, the configure method now initialises the device driver for the device instance, step 631. Again the initialisation is done via the sysconfig() system call. Before calling sysconfig() to initialize a device driver, the configure generates the major and minor device numbers to be associated to the device instance, step 629. Both major and minor device numbers are maintained in the configuration database so they can be preserved across IPLs. A generic low-level routine is available to get a valid major device number for a device driver instance. Another generic low-level routine is also available for generating the next available minor number under a device driver instance. If a special minor number generation routine is needed for the device, then the configure method calls the appropriate device-specific minor number generation routine. To call sysconfig() to initialize a device driver for the device instance, the configure method passes the major and minor number associated with a device instance and its DDS structure.

The configure method maintains a count of configured instances associated with a device driver. If the count is larger than a predefined limit, then the configuration fails, and an appropriate error code is returned. Note that this count can be used as an indicator of when to load and unload a device driver.

The following is accomplished during the device driver initialisation process, step 631. The device driver instance is initialised with the supplied DDS structure. If the device requires its microcode to be downloaded, then the device initialisation routine downloads the microcode using the microcode pathname recorded in the DDS. If the device requires allocation of a buffer pool (e.g., required by communication adapters), then the device initialisation routine does the allocation.

The configure method sets the status flag of the customised device object to 'configured' only after successfully initialising the device driver, step 632. The configure method creates the necessary special file entries (if any) in /dev associated with the configured device, step 633. The special conventions (if any) used for naming the /dev entries which are specific to the device are known and used by the configure method. Note that not all devices that get configured require creation of special file entries in /dev. Also note that some devices require creating multiple entries in /dev. This is true for those devices, such as floppy diskette drives, possessing different sets of entry points.

When configuring a multiplexor device, step 634, the configure method prepares (if feasible) the definition of devices actually attached to the multiplexor device. This preparation process is only required for those multiplexor devices whose associated device drivers have the capability of inquiring what devices are actually attached. This preparation process is be done only after the multiplexor device is initialised and its microcode (if any) downloaded. To inquire what is actually attached to the multiplexor device, the configure method utilises the ioctl services of the associated device driver. For those detected devices which can be identified, step 635, the configure method invokes the appropriate define methods so that these detected devices are defined in the database, step 636. If the attached devices are self-identifying, the configure method verifies if there is a match in identities between the device recorded in the customised device object and the actual device. The configure method tries, if feasible, to solve out the situation of devices being shuffled around, and mark any mismatch between customised database and the actual device.

The configure method queries the customised database and returns to the caller (configuration manager or high-level command) a list of devices whose configure methods need to be run, step 637. It is the responsibility of the configuration manager and high- level command to determine how and when to invoke the configure methods for those devices. For example, the configuration manager may refer to the customised connection objects to know when to invoke configure methods for pseudo device such as hft and tr (Token Ring IF). The configure method for a logical device examines the dependency map and then examines the customised objects for what dependence objects were really configured. The configure method then determines whether there is enough of the dependence devices found to be configured. The Configure methods for a logical device also returns devices dependent on it, based on the connection object class.

The start method is invoked to communicate to applications or controlling subsystems that the device is now available for their control. This may include informing multiple controlling subsystems or applications. Recall that a device, as far as the device driver is concerned, can be used after it is configured via its associated configure method. The role of the start method is to perform the extra steps necessary so that application processes can start using the device. The extra steps necessary to start the device for application processes can vary from one device type to another. For example, after configuring a TCP/IP inet instance, the start method invokes the hostname, route, and ifconfig commands to initialize route information and to enable the network interface.

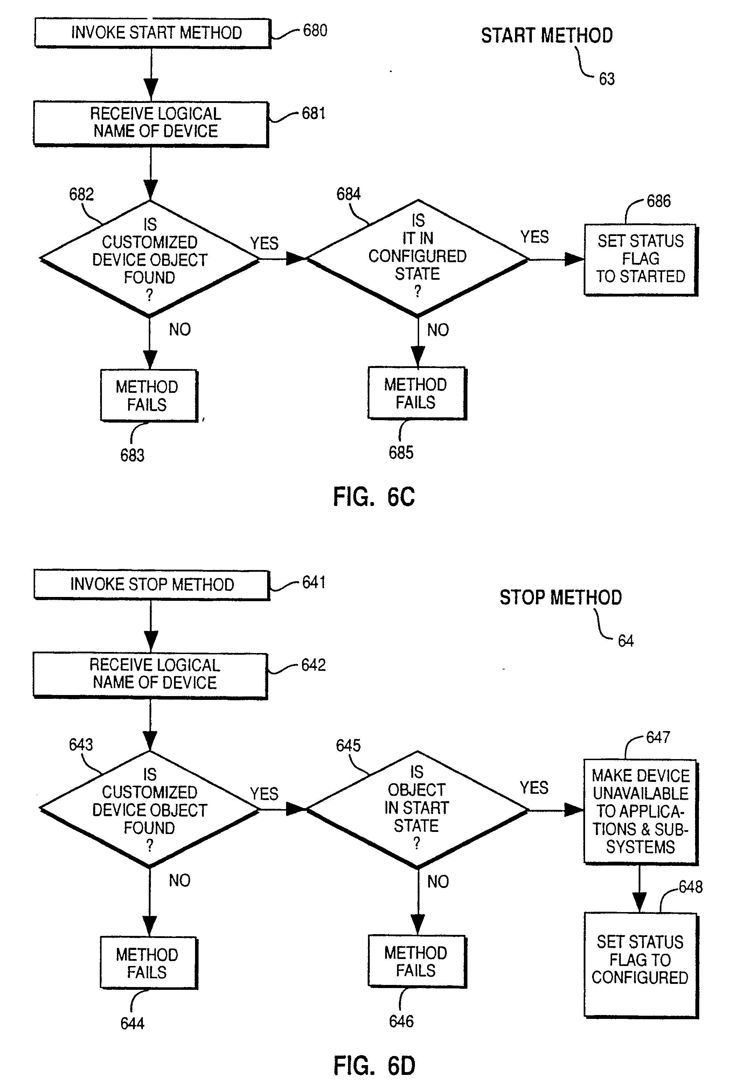

The start method 63 is described with reference to Fig. 6C. The start method knows the extra steps to be performed to make the device available/known for use to applications or subsystems. Whenever available, existing commands are called to perform the extra steps needed to prepare the device for use by application processes. When invoked, step 680, the start method is passed, among other things, the logical name of the device to be started, step 681. If a customised device object is not found with the given logical name, step 682, then the start method fails, step 683. If the customised device object is found but is not in a 'configured' state, step 684, then the start method also fails, step 685. If the start method is successful, then it sets the status flag of the customised device object to 'started', step 686. If not successful, the status flag is not changed. A device in 'started' state implies that the extra steps required to prepare it for application processes have been performed. If for some reasons the device to be started is not online, then the start method fails and returns with the appropriate error code. Note: Typically physical devices do not have Start and Stop methods.

The stop method 64, Fig. 6D, is invoked to undo the series of actions performed by its corresponding start method. For example, in stopping a TCP/IP inet instance, the stop method sends messages to users to terminate their TCP/Ip sessions and calls ifconfig command to disable the network interface. As far as the device driver of a stopped device is concerned, the device can still be used perhaps by calling the device driver entry points directly. However, the device is unavailable to those applications or subsystems which require the device to be started.

The steps for the stop method are as follows. The stop method knows the steps needed to undo the series of steps performed by a corresponding start method. After performing its own series of actions, the stop method makes the device unavailable to associated applications or subsystems, step 647. Whenever available, existing commands are called to stop a device for further use by application processes. When invoked, step 641, the stop method should be passed, among other things, the logical name of the device to be stopped, step 642. If a customised device object is not found with the given logical name, step 643, then the stop method fails, step 644. If the customised device object is found but is not in a 'started' state, step 645, then the stop method also fails, step 646. If the stop method is successful, then it sets the status flag of the customised device object to 'configured', step 648. If not successful, the status flag should not be changed.

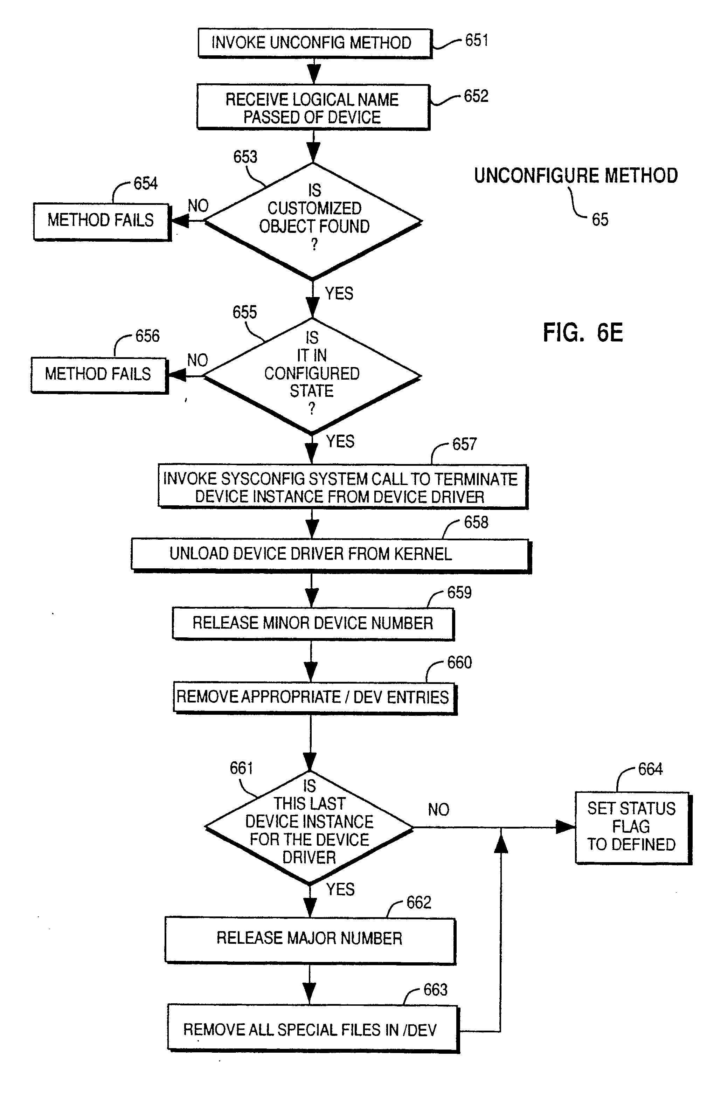

The unconfigure method 65, Fig. 6E, is invoked to undo the steps performed by the configure method 62 on the device driver. The device driver unconfiguration steps include: 1) terminating the device instance from its device driver, 2) unloading the device driver (if needed) from the kernel, and 3) releasing, if needed, the major and minor device numbers and deleting the appropriate /dev entries. Unconfiguring a device implies that it can no longer be used in the system.

With reference to Fig. 6E, the steps for the unconfigure method are as follows. When invoked, step 651, the unconfigure method is passed the logical name of the device to be unconfigured, step 652. If the customised device object associated with the given logical name is not found in the database, step 653, then the unconfigure method fails, step 654. If the customised device object is found but is not in 'configured' state 655, then the unconfigure method also fails, step 656. On failure, the method returns the appropriate error code.

The unconfigure method invokes the sysconfig () system call to terminate the device instance from its device driver, step 657. The configure method decrements a count of configured instances associated with a device driver. When the instance count reaches zero, the unconfigure method unloads the device driver code from the kernel by calling the sysconfig () system call, step 658. After the device instance is successfully terminated, depending on the characteristics of the device, the unconfigure method releases the minor device number assigned to the device, step 659. When the minor device number is released, the unconfigure method removes in /dev the special file entries associated with the device instance, step 660. In general, one or more special file entries (depending on the sets of entry points offered by the device) may be associated with a device. If this is the last device instance for the device driver, depending on the characteristics of the device, step 661, the unconfigure method may release the major device number assigned to the device, step 662. When the major device number is released, the unconfigure method removes in dev all of the special file entries associated with the device driver, step 633. Note that if a major or minor device number is not released, then the device will get the same device number when the device is configured next time. The unconfigure method sets the status flag of the customised device object associated with the unconfigured device back to 'defined', step 664.

The undefine method 66, Fig. 6F, is invoked to delete the customised device object and its associated objects of a given device stored in the database. A device which is undefined in the customised database is no longer known to the system. The steps for the undefine method are as follows. When invoked, step 670, the undefine method is passed the logical name of the device to be undefined, step 671. If the customised device object with the given logical name is not found, step 672, then the undefine method fails, step 673. If the customised device object is found but is not in 'defined' state, step 675, then the undef ine method also fails. On failure, the appropriate error code is returned, step 674. The undef ine method deletes the customised device object together with its associated information such as DDS structure, connection object, attribute object, dev entry, etc, step 676. If this is the last device instance for the device driver, the major device number is released.

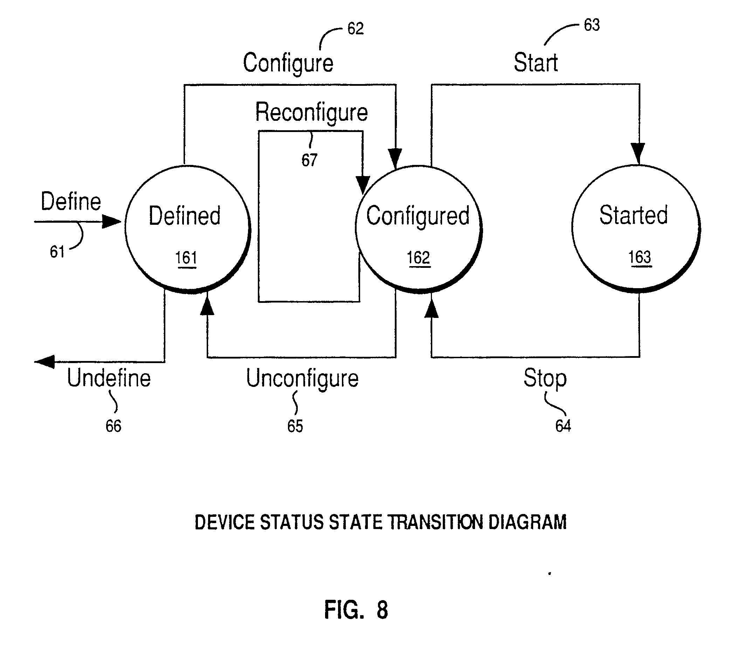

Fig. 8 is a state transition diagram showing how the objects go through the different states based on the methods that are invoked. When a define method 61 is invoked, the object is in a define state 161. The configure method 62 is invoked to put the object in the configured state 162. To go from the configured state 162 to the start state 163, the start method 63 is invoked. To go from a started state 163 back to the configured state 162, a stop method 64 is invoked. To go back to a defined state 161, the unconfigure method 65 is invoked. To remove the object from the existence of the database, the undefine method 66 is invoked. Fig. 8 also addresses reconfiguring an object 67, which is effectively keeping the object in its configure state but changing its attributes.

The above methods are used during the configuration of both physical and logical devices. The above methods will be further described with reference to the configuration of a physical device, i.e. a bush where a bus is viewed as a multiplexor device. Bus configuration conceptually means defining the appropriate bus customised object in the database, detecting what is actually attached to the bus, and resolving conflicts between adapter attributes. The bus device methods are as follows.

The bus define method simply creates a customised bus device object from a predefined set of objects in the configuration database. Before customised adapter device objects can be created in the database, the bus object providing the connection point for the adapters is defined.

The bus configure method examines the bus and detects what adapter card is attached to which slot, and resolves conflicts between adapter resources. This method configures all base adapters during IPL phase 1 and all other adapters during IPL phase 2.

To examine the bus, the low- level command "busquery" is invoked. The command "busquery" returns a list of device ids identifying adapter cards actually attached to the bus. The slot number of each adapter card is also returned. The list of adapter card ids is then used by the bus configure method to update the customised adapter objects in the database. The bus configure method observes the following rules. 1) The bus configure method is normally invoked by the configuration manager during IPL. 2) The bus configure method uses adapter card id to extract adapter objects in the predefined configuration database. 3) For each adapter card that is considered as a bus extension, such as NIO (Native 1/0) and Expansion adapter cards, the bus configure method must detect all adapters that are attached to these bus extension adapter cards. 4) For all of the adapters detected, the bus configure method extracts their objects and creates a working template in memory, and invokes the busresolve command to resolve conflicts between adapters. Once the conflicts have been resolved the adapter define methods are used to update the configure database. The define method, in this case, will be passed an IPL flag to indicate that conflicts have been resolved. 5) For each adapter object, the bus configure method must flag it as either "missing", "new", or "same" to reflect any changes between IPL's. 6) The bus configure method returns to its caller, the configuration manager, a list of adapters that need to be configured.

The bus undefine method simply deletes the customised bus object in the configuration database. The method fails if configured adapters are attached to the bus at the time of deletion.

"Busquery": This function is encapsulated into a device-specific low-level bus command. This command checks each slot on the bus to determine what adapter cards are currently attached. In order to determine what is attached to a slot, the appropriate inquiry call is issued to the machine device driver. For each slot, this command returns an id to identify the type of the attached adapter card. The caller of this command can use the returned ids to find attached adapters.

"Busresolve": This is encapsulated into a low-level bus command to resolve conflicts within the bus. This low-level command is normally invoked by the bus configure method and adapter define methods to detect and resolve conflicts between adapters attributes. When resolving conflicts, this command should take the base device and user-desire attributes into consideration. An adapter designated as a base device has priority over a non-base adapter. The low-level command can be invoked with the following different options. 1) Instructing the command to fail if adapter conflicts are detected. This command returns the appropriate error code to the caller if fail. 2) Instructing the command to resolve conflicts if conflicts are detected. When it is successful, this command updates the database to record the new attributes assigned to each adapter as the result of conflict resolution. If it fails, this command returns the appropriate error code to the caller.

Two low-level device commands/routines used by the bus configure method were the "busquery" and the "busresolve" commands. In general, low-level device commands/routines perform system level services and special functions fundamental to the device configuration process. For each method, a set of specific commands are encapsulated; which may be device specific. The commands/interfaces used by methods are referred to as low-level commands/routines. Some additional low-level device commands/routines are described as follows.

The generic low-level routine "ddsbuild" constructs device dependent structure (DDS) information. Given the customised device object and attribute list, this routine uses DDS template information stored in the database and builds a DDS structure appropriate for the device. The generated DDS structure 570 is also stored in the database as shown in Fig. 5. The DDS template information is stored in special object classes in the database. One object class is allocated for each unigue DDS template. Each device object is associated with the name of the DDS template object class.

The generic low-level routine "ddsjoin" joins the DDS of the given device with the DDS of the devices that the given device depends on. The resultant DDS then has information from its ancestral devices that may affect the behaviour of the given device.

The generic low- level routine "genmajor" assigns a valid major device number for the given device instance. Every device driver instance has a unique major device number. When the device instance is the very first one for the associate device driver instance, this routine assigns the smallest available number as the major device number for the device. When the device instance is not the first instance for the device driver instance, this routine returns the major device number of the associated device driver.

The generic low-level routine "genminor" is invoked by the configure method to generate a minor device number for a device instance. All device instances associated with a device driver instance has unigue minor device numbers. To create a unique minor device number, genminor extracts from the customised database all customised device objects associated with a given device driver instance. The smallest possible (a positive integer) unused minor number within a given device driver instance is returned. The configure method has a special method of creating (multiple) minor device numbers for its device instances instead of using this generic low-level routine. A configure method in this special case calls its own device-specific minor device number generation routine.

The generic low-level routine "attrval" is invoked by methods as well as by higher level programs to validate whether a given attribute value is within range. in order to be able to validate an attribute value, "attrval" is given the device object, the attribute name, and the attribute value. The "attrval" routine can extract the attribute's defined options (i.e. valid range) in the predefined database. The predefined option is then parsed by "attrval" to verify that the given attribute value is within the allowed range.

The above described low-level commands/routines are generic commands/routines. The following described low-level commands/routines are device specific.

The low-level device command to configure a tty port is called by methods when a tty port is being configured as tty, printer, modem, plotter, or other serial devices. This command changes information in the ports object class. The port object class contains the names and characteristics of all the system terminal ports. The "getty" process is the principal user of the information. To add a port, entries which include the new device name, the correct speed, terminal model, parity, login mode, enable/disable status, remote flag, and other related variables must be created in the ports object class. To change a port, the corresponding entries in the ports object class must be updated. To delete a port means to remove the corresponding entries from the ports object class.

A low level command is called by the configure and unconfigure methods for pseudo-terminals when adding/deleting a pseudo-terminal. For every pseudo-terminal there is a pair of associated virtual devices: pts and ptc. Most of the device attributes are defined for pts. This command generates a corresponding ptc device from pts and makes sure that a ptc device gets configured whenever its peer pts is configured.

The low-level command for enabling/disabling a tty port is normally invoked by the start and stop methods. This command makes a tty port available or unavailable for the system login process. Its input parameter is the logical device name of the port that is to be enabled or disabled. When disabling a port, this command kills the logger running on the specified port (even when the logger is busy), thereby making the port unavailable for further logins.

Some other low-level commands are as follows.

The restore-base utility reads through the NMI and unpacks the base customise information and loads it into the boot filesystem in RAM as customise and container objects. The restore-base command uses the ODMpack facility which is a generic facility which reads ODM object classes and packs the objects in a standard format; written to a target specified on the command line.

The save-base utility takes the contents of the base customise information (customise and container), packs it, and dumps it back to NVRAM using the NMI. The save-base command uses the ODMupack facility which is a generic facility which reads the packed objects and unpacks them into the current version of the ODM structure.

Mkboot (same as BootBuild) is a utility which opens up the /dev/RAMdisk and copies its contents to the boot logical volume.

The ADFformat command reads an ADF file supplied with an adaptor is converted into an ODM format. The target is supplied on the command line and typically this is the predefine object class.

The Mkiplist command allows the user to alter the list of IPL devices seen by ROS when the machine boots. This will effect the hardware portion of NVRAM.

The LoadRV command loads device drivers into the software portion of NVRAM by reading an input device and writing through the NMI to NVRAM.

The Quser command determines whether a resource owned by a queue device manager is in use and if so; returns the pid(s) of those using it.

The configuration manager knows very little about the configuration process itself. It simply gets its initial configuration rules and then processes according to the configuration mode. In addition, the configuration manager is hardware independent. The configuration manager processes in the following fashion.

First, it gets its starting device from the config_rule object class and invokes the appropriate methods. Generally this means running the methods for the system object. For each multiplexor found by getting the multiplexor device object and invoking its configure method the following steps of the configure method are iterated: loading LEDs, getting DDS, executing the low-level device command (if applicable), binding the device driver, creating dev/entry (if necessary), initialising the device drivers, downloading microcode (if necessary), collecting device-specific information, updating the customise set of objects, querying for attached (terminal) devices, and invoking the define method for each attached (terminal) device found if the device is not already known to customise. For each terminal device found by getting the terminal device object and invoking its configure methods, the following steps of the configure step are iterated: loading LEDs, getting the DDS, executing the low-level device command (if applicable), binding the device driver, creating /dev entry (if necessary), initialising the device drivers, collecting device-specific information, and updating any device configuration information in customise set of objects. The configuration manager then configures any devices which are not yet configured.

The following guidelines are observed by the configuration manager during IPL. The first action that the configuration manager performs after getting invoked is retrieving configuration rules from the database. The actions performed by the configuration manager are inferable from the rules. The configuration configures all of the devices that need to be configured in a sequence. The exact sequence of the device configuration is dictated by configuration rules, device connectivity information, and device attributes recorded in the database. When invoking the configuration manager, the appropriate flag is supplied indicating to the configuration manager whether it is called during the first phase of IPL or during the second phase of IPL. When invoked during the first phase of IPL, the configuration manager configures the minimal set of base devices. The base system includes the root filesystem. To configure a minimal base system, the configuration manager is limited by the following sets of information: 1) predefined device objects for possible base devices loaded from the boot information in RAM, 2) customised device objects for base devices loaded and unpacked from NVRAM. In the absence of a local NVRAM, the base customised device objects can come from several sources: 1) from the boot information which requires storing the customised objects in the boot devices(s), 2) from an NVRAM server across the network, and 3) from an equivalent of an NVRAM (ie. any memory whose contents persist between IPLs in the system. If no base customised device object is found in NVRAM (e.g. the very first IPL), then the configuration manager configures the base system purely based on the predefined device objects for base devices which came with the boot information. The configuration manager updates NVRAM if any base devices are altered during the IPL process.

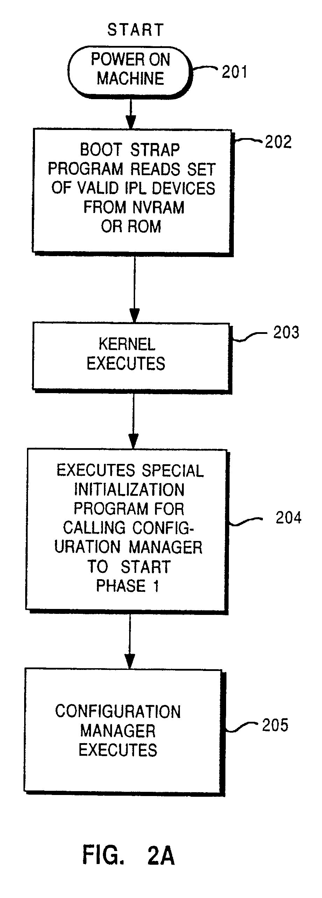

Fig. 2A is a flow diagram showing the IPL and configuration process. First, the machine is powered on, step 201. Bootstrap program reads the set of valid IPL devices from non-volatile ram (NVRAM) or ROM and boots the kernel from the appropriate IPL device such as a disk, diskette, local area network (LAN), etc., step 202. This step includes loading the boot information (kernel, debugger, boot FS, etc.) into RAM. The boot filesystem, at this point, will contain only the predefined objects. Next, the kernel executes, step 203. This step includes initialising real memory, I/O channels, registers, interrupt mask, page tables, virtual memory, etc.; loading the debugger, and mounting the boot filesystem in RAM. In step 204, an initialisation program is executed from the boot filesystem which starts the configuration manager for phase 1.

The first phase of IPL will only configure the base devices such as LEDs, diskette, logical volume manager physical volumes, root volume group, etc. Base devices are the minimal number of entities that are required in order to get the system powered up. The configuration manager then executes, step 205. The first phase utilises the information that has been previously saved in nvram, step 206. As part of the boot filesystem, a set of configuration objects will exist which provide the predefine information in the predefined object class for the base devices. The actual configuration or base customised objects from this phase will be written to the boot filesystem in RAM as ODM objects. The define method for devices in this first phase of IPL gets objects from the predefine object class, and writes to the customised object class in the boot filesystem in RAM. The configure methods for devices in this phase affect the objects found in the boot filesystem in RAM.

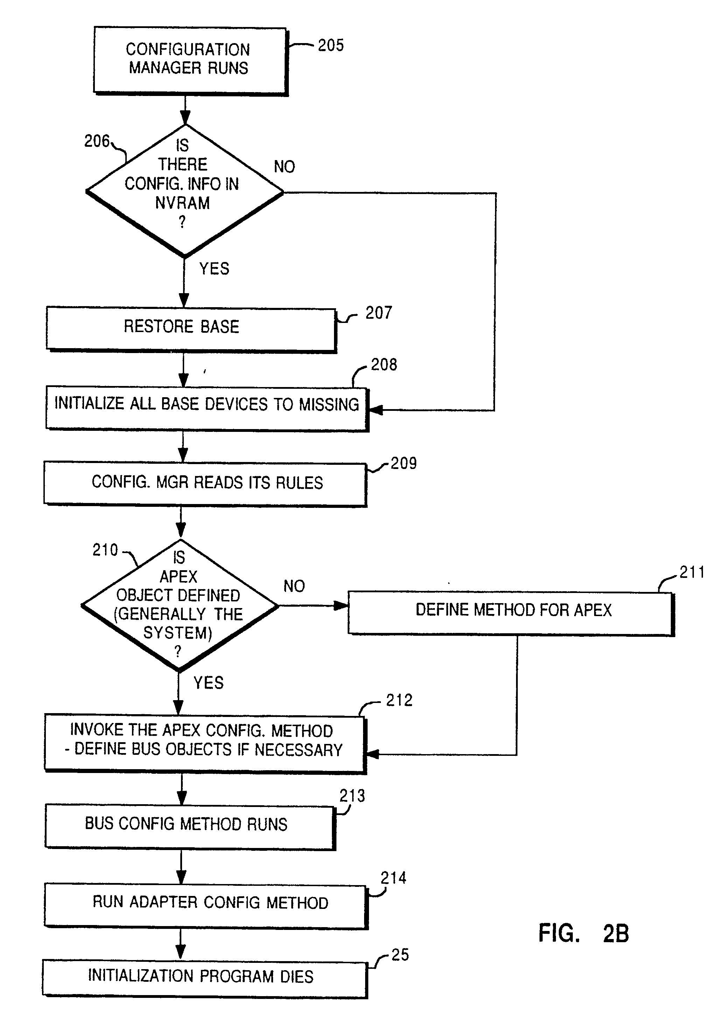

Fig. 2B is a flow diagram showing the execution of phase 1 of the configuration manager. The configuration manager determines if there is configuration information available from a prior IPL, step 206. If there is, a restore-based utility runs which attempts to load the base configuration information (rules, device drivers, customised objects) from NVRAM, if any exists, and loads it into the boot RAM filesystem (ramdisk), step 207. All base devices are set to missing, step 208. The configuration manager reads the configuration rules, step 209, to determine what to configure and in what order. The rules in this phase will generally sequence the system followed by the logical volume manager, etc. One of the rules will dictate the apex for the system which generally is the system object. Step 210 determines if the apex object is defined (generally the system object). If it has not been defined, the configuration manager will invoke the define method, step 211, for the apex object. The define method only runs if the object is not known to customise. This step 211 includes merging information from IPL control block. Step 212 includes finding and defining the objects connected to the system (generally the bus), determining whether the bus has been defined, running the define method if not, and returning to the configuration manager the objects connected to the system (generally the bus).

Next, the configure method for the bus runs, step 213. This includes the following steps: 1) The base objects connected to the bus (generally adapters) are found and defined by using customised base devices as hints. If there are no hints or NVRAM is bad, then the bus is examined for base devices in the predefine object class. It is further determined whether the adapters have been defined, and if not, the define method runs. 2) The objects (generally adapters) connected to the bus are returned to the configuration manager.

Next, the configure methods for the adapter run, step 214. This step includes configuring the device driver for the adapter. In addition, the base objects connected to the adapters (generally terminal devices) are found and defined by using customised base devices as hints. Sf there are no hints, or NVRAM is bad and its a SCSI adapter, the the SCSI bus is examined for base devices in the predefine object class. The adapter is queried for attached devices (generally terminal devices) and the define methods are executed. If the configuration is different or not found, the change flag is updated (either new or missing) for diagnostics. The objects connected to the adapter (generally terminal devices) are returned to the configuration manager.

The following steps are then performed. All devices found are configured and the configure/start methods are executed. If the bus, memory, floating point, etc. cannot be configured, it exits with an error code (255). Next, varyon the root volume group. If root volume group is bad and system is alright, it exits with an error code (1). If root volume group is alright, and system is alright, the sysconfig() system call is invoked to inform the kernel of the root device and root logical volumes by setting system parameter with logical volume device number, and exits with (0). If the root volume group is not found, and the system is alright, the install program is executed which does the following: picks a physical volume, creates root volume group, varyon root volume group, creates logical volumes for root, diagnostic. pager, boot, etc., invokes sysconfig() system call to inform the kernel of the new root device and root logical volumes by setting system parameter with logical volume device number, starts pager, makes filesystems on logical volumes, mounts ΄ or /user directory, populates all root logical volumes with multi media (prompt through LEDs to insert more diskettes), duplicates /dev entries found in RAM filesystem (ramdisk) on real root filesystem, unmounts / or /usr directory and varyoff root volume group, if success, exit with (0), else, exit with error code (1).

At step 215, the initialising program dies and control is returned to the kernel. This includes unmounting the RAM filesystem (ramdisk), making changes to the root filesystem on hard disk, and executing init from the root file system which starts the configuration manager for phase 2.

In this second phase, the base customised objects found in the RAM filesystem (the base devices which have the config flag set) are merged into the base customised objects found in the root filesystem. In addition, all the necessary /dev entries exist in the root filesystem. Following the merge process, the second phase is basically the same as the first phase. The primary difference is that the configuration determined in this phase is for all non-base devices. The customised information from this phase is completely stored in the root filesystem as ODM objects. In this second phase, within the root filesystem there exists a larger set of predefine objects than found in the boot filesystem plus the customise and container objects representing the last actual known configuration of the system. The customise and container objects are the target for any configuration changes made by the device or bus configurator commands. At the end of this phase, all of the base customise objects will be dumped to NVRAM using the savebase command. This is to reflect the final state of the base devices. At this point, the NVRAM version of the base customise objects take precedence over the boot filesystem versions, assuming NVRAM is available. The define methods for devices in this phase will get objects from the predefine object class and are added to the customise object class in the root filesystem. The configure methods for devices in this second phase perform changes directly in the customised object class found in the root filesystem. Though the destination of the customise objects are different in the two phases, the interface to all the low-level commands remain the same. In both cases, the data is being read and written through the ODM interfaces to a filesystem. In one case the filesystem is in RAM, and in the other case the filesystem is disk based.

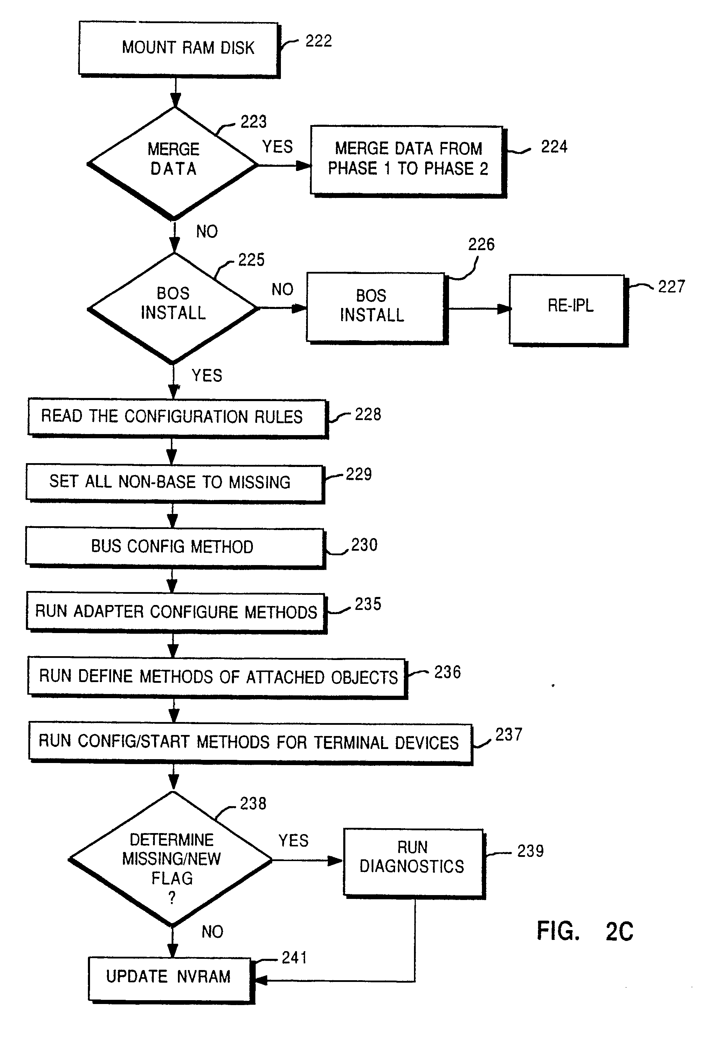

The above description of Phase 2 of the configuration manager is more specifically described in Fig. 2C. First, the ramdisk is mounted under the root filesystem, step 222. The base customise in the RAM filesystem is merged, step 224, with the root filesystem. The configuration manager determines if the base operating system needs to be installed, step 225. The base operating system installation is executed, step 226, and then IPL's, step 227, if the base operating system is not yet installed. The configuration rules objects are read to determine what to configure and in what order (sequence rule is system, lvm, hft, tcp, etc.), step 228. All non-base devices are set to missing, step 229.

Next, the configure method for the bus runs, step 230. This includes finding and defining the non-base objects connected to the bus (generally adapter). This further includes determining whether the adapters have been defined, and if not, the define methods are run. If the configuration is different or not found, the change flag is updated (either "new" or "missing") for diagnostics. The objects connected to the bus (generally adapters) are returned to the configuration manager.

Next, the configure methods for adapters runs, step 235. This includes configuring the device driver for the adapter, and finding and defining the non-base objects connected to adapters (generally terminal devices), step 236. This later step includes querying the adapter for attached devices (generally terminal devices) and executing their define methods. If configuration is different or not found, the change tag is updated (either "new" or

"missing") for diagnostics. The objects connected to the adapter (generally terminal devices) are returned to the configuration manager.

The following steps then occur. All devices (terminal) found are configured and their config/start methods are executed, step 237. Once the system has been configured, the logical devices are configured based on the configuration rules and customise objects. The configuration manager gets objects which have had the config change flag set to either "missing" or "new", step 238. If configuration is different, diagnostics are run to update the customise/container objects, step 239.

Diagnostics will be run when the machine is IPL'd for the first time because configuration has changed (it did not exist before). Finally, the configuration manager runs an update NVRAM utility which takes the content of the base customise objects in the root filesystem and dumps it back to NVRAM in a packed format, step 241. Due to conflicts, the base customise may have changed. At this point, IPL is complete.

An explanation of configuring logical devices follows. A logical device is a software-based device which behaves like a real device. Some pseudo devices (e.g., console, hft) have dependencies on other hardware-based devices. These pseudo devices can only be configured after their dependencies (i. e., hardware that they run on) have been configured. The dependencies between devices is recorded in the configuration database. Some examples of logical devices include TCP/IP, high function terminal (hft), and the logical volume manager (lvm).

The configuration of a logical device is similar to that of other devices. Each logical device has a predefined device object in the configuration database. The configuration manager and high-level device commands invoke the appropriate methods and low- level commands to configure a logical device.

The following rules are observed in configuring logical devices:

1. Certain types of pseudo devices have their device drivers prebound with the kernel and their customised database contained within the base operating system. These devices normally do not need to be configured either during IPL or runtime. However, in order to establish their customised database once it is lost, there is a set of configuration methods shared by these devices to configure these devices during IPL. This is to prevent user from reinstalling the base operating system when customised database is lost. The set of configuration methods configure all the prebound devices and may include only one define method and one configure method. Other methods are not needed.

2. There is no high-level device command for prebound logical devices. Prebound logical devices are preinitialised into the customised configuration database.

3. Logical devices which can be configured during runtime can be treated as real devices, and therefore may share the same configuration strategy with real devices. There will be a set of high-level device commands available to configure these devices during runtime.

4. The configuration manager automatically configures logical devices during IPL by using customised connection information and the appropriate configuration rules.

5. The dependencies between logical devices and real devices, and the dependencies between different logical devices are kept in the connection object class in the database. These dependencies are established and recorded when logical devices are being configured.

6. During IPL, the configuration manager uses the combination of dependency information and pre-determined sequence as hint as to when to configure logical devices. For example, console is a logical device which must be configured even if dependency information fails to tell the configuration manager when to configure the console, a predetermined sequence can be used as a secondary hint.

7. The define methods of logical devices are built-in with the appropriate intelligence so that they can auto define their device instances based on configuration information recorded in the database. There is a sequence rule that tells the configuration manager a sequence of configuring different node types. If a logical device is described in the sequence rule, the define method will always by run by the configuration manager at IPL time. The define method defines all of its dependencies and puts them in the connection object class for all instances of that device type. For new physical devices found in subsequent IPLs, new logical dependencies for the new physical devices are added by the define method. For example, an HFT define method has the intelligence of searching the customised database as to what physical devices have been found, what to constitute an HFT, and how to define an HFT instance.

8. The configure method for a logical device looks at the dependency map and then looks at customised objects for what dependence objects were really configured. The configure method will then determine whether there is enough of the dependence devices found to be configured. The configure methods for a logical device also returns devices dependent on it, based on the connection object class. For example, the HFT configure method looks at the connection object class to know what physical devices are the components of a HFT, it then looks at the customised objects to know which physical devices are already configured. This method then attempts to configure the HFT based on the configured components.

While the invention has been particularly shown and described with reference to a preferred embodiment, it will be understood by those skilled in the art that various changes may be made without departing from the scope of the invention.

## Claims

1. A data processing system comprising, for configuring the system, means for representing a plurality of entities, having attributes, of the data processing system as a plurality of objects stored in an object oriented data base, means for defining a plurality of methods associated with the objects and means for invoking the methods to perform at least one operation on the objects independent of the attributes for dynamically configuring the data processing system.

2. A data processing system as claimed in claim 1 wherein the means for representing the entities further comprises means for representing at least one physical device and at least one logical device of the data processing system.

3. A data processing system as claimed in claim 1 or claim 2 further comprising means for dynamically updating the object database with at least one definition of the plurality of objects and with information of at least one connection between the objects wherein a reboot of the system is avoided.

4. A data processing system as claimed in claim 1 wherein the means for invoking the methods performs at least one operation on objects for dynamically configuring the system when the system is booted.

5. A data processing system as claimed in any preceding claim further comprising means for representing a topology in the object oriented database of at least one connection between the plurality of objects and traversing the topology of the objects to configure the objects of the data processing system.

6. A data processing system as claimed in any preceding claim wherein the attributes define a plurality of physical device entities and logical device entities of the data processing system.

7. A procedure for configuring a data processing system; the procedure comprising: representing a plurality of entities, having attributes, of the data processing system as a plurality of objects stored in an object oriented data base; defining a plurality of methods associated with the objects; and invoking the methods to perform at least one operation on the objects independent of the attributes for dynamically configuring the data processing system.

8. A procedure as claimed in claim 7 wherein the step of representing the entities further comprises representing at least one physical device and at least one logical device of the data processing system.

9. A procedure as claimed in claim 7 wherein the methods are invoked for dynamically configuring the data processing system when the system is booted.

10. A procedure as claimed in any preceding claim further comprising the step of representing a topology in the object oriented database of at least one connection between the plurality of objects and traversing the topology of the objects to configure the objects of the data processing system.

FIG. 1

START

POWER ON
MACHINE — 201

BOOT STRAP
PROGRAM READS SET
OF VALID IPL DEVICES
FROM NVRAM
OR ROM — 202

KERNEL
EXECUTES — 203

EXECUTES SPECIAL
INITIALIZATION
PROGRAM FOR
CALLING CONFIG-
URATION MANAGER
TO START
PHASE 1 — 204

CONFIGURATION
MANAGER
EXECUTES — 205

FIG. 2A

EP 0 398 644 A2

```
        ┌──────────────────────┐
        │   CONFIGURATION      │──── 205
        │   MANAGER RUNS       │
        └──────────────────────┘
                   │
                   ▼
        206   ◇ IS THERE
              CONFIG. INFO IN        NO
              NVRAM ?  ─────────────────────┐
                   │                        │
                  YES                       │
                   │                        │
                   ▼                        │
        ┌──────────────────────┐            │
        │   RESTORE BASE        │──── 207    │
        └──────────────────────┘            │
                   │                        │
                   ▼                   208  │
        ┌──────────────────────────────┐    │
        │ INITIALIZE ALL BASE DEVICES  │◄───┘
        │ TO MISSING                   │
        └──────────────────────────────┘
                   │
                   ▼
        ┌──────────────────────────────┐
        │ CONFIG. MGR READS ITS RULES  │──── 209
        └──────────────────────────────┘
                   │
                   ▼
        210   ◇ IS APEX
              OBJECT DEFINED       NO      ┌──────────────────────────────┐
              (GENERALLY THE  ───────────► │ DEFINE METHOD FOR APEX       │──── 211
              SYSTEM) ?                     └──────────────────────────────┘
                   │                                      │
                  YES                                     │
                   │                                      │
                   ▼                  212                 │
        ┌──────────────────────────────┐                 │
        │ INVOKE THE APEX CONFIG.      │◄────────────────┘
        │ METHOD - DEFINE BUS OBJECTS  │
        │ IF NECESSARY                 │
        └──────────────────────────────┘
                   │
                   ▼
        ┌──────────────────────────────┐
        │ BUS CONFIG METHOD RUNS       │──── 213
        └──────────────────────────────┘
                   │
                   ▼
        ┌──────────────────────────────┐
        │ RUN ADAPTER CONFIG METHOD    │──── 214
        └──────────────────────────────┘
                   │
                   ▼
        ┌──────────────────────────────┐
        │ INITIALIZATION PROGRAM DIES  │──── 25
        └──────────────────────────────┘
```

FIG. 2B

MOUNT RAM DISK — 222

MERGE DATA — 223 → YES → MERGE DATA FROM PHASE 1 TO PHASE 2 — 224

NO

BOS INSTALL — 225 → NO → BOS INSTALL — 226 → RE-IPL — 227

YES

READ THE CONFIGURATION RULES — 228

SET ALL NON-BASE TO MISSING — 229

BUS CONFIG METHOD — 230

RUN ADAPTER CONFIGURE METHODS — 235

RUN DEFINE METHODS OF ATTACHED OBJECTS — 236

RUN CONFIG/START METHODS FOR TERMINAL DEVICES — 237

DETERMINE MISSING/NEW FLAG ? — 238 → YES → RUN DIAGNOSTICS — 239

NO

UPDATE NVRAM — 241

FIG. 2C

# Object Classes related to Predefined Devices —— 300

## Predefined Devices

| Dtype | • • • | Methods | DDtype | Vlink | link | DDS temp |
|---|---|---|---|---|---|---|
| Display 3812 Adapter tty rs232-8p | | | Dis_ada lp scsi_ada tty | | | skyw ptr scsia tty |

## Predefined connection & containment —— 320

| Dype | Conn_key | type | loc |
|---|---|---|---|
| rs232-8p | MCA_bus | P | |
| rs232-8p | Ex-bus | P | 1 |
| rs232-8p | rs232 | C | |
| rs232-8p | SysUnit | F | |
| rs232-8p | ExpBox | F | 1 |

## Predefined Attribute —— 340

| Dtype | AttName | Qualifier | AttType | AttValue |
|---|---|---|---|---|
| rs232-8p | ioaddr | default | hex | 3A40 |
| rs232-8p | ioaddr | range | list | 3A40,3B50 |
| rs232-8p | ioaddr | description | string | {nis index} |
| rs232-8p | dmalv | default | decimal | 5 |
| rs232-8p | dmalv | range | list | 3,5,6,7 |

## DDS Template

| AttName | AttType | Offset | Size |
|---|---|---|---|
| baud parity | int char | 0 4 | 4 1 |

## PreDdriver

| Dtype | Pathname | maxminor |
|---|---|---|
| tty | /etc/code/tty | 1248 |
| lp | /etc/code/lp | 128 |
| hd | /etc/code/hd | 64 |
| scsi_ada | /etc/code/scsci_a | 64 |
| Dis_ada | /etc/code/dis_a | 16 |

FIG. 3

Containers / Devices Graph 460 400

**FIG. 4A**

Legend:
- ▢ Container
- ▢ Device
- — Connectivity
- --- Dependence

Devices Graph ⌐400

FIG. 4B

Containers ⌐460

FIG. 4C

# Object Classes related to Customized Devices — 500

## Customized Devices — 510

530

| DName | ⋯ | DD instance | DD type | Link | Vlink | link | link |
|-------|---|-------------|---------|------|-------|------|------|
| hdisk0 | | hd | hd | | | | |
| lp0 | | lp | lp | | | | |
| tty0 | | tty | tty | | | | |
| tty1 | | tty | tty | | | | |
| sa0 | | | | | | | |
| vg1 | | Vgi0 | LVG | | | | |
| vg2 | | Vgi1 | LVG | | | | |

505

505

## Customized connection — 520

| DName | Dependence | type | LOC |
|-------|-----------|------|-----|
| tty0 | sa0 | P | 1 |
| tty1 | | | |
| ⋮ | | | |

## Customized Containment — 525

| DName | FRU | Enclsr | type | loc |
|-------|-----|--------|------|-----|
| tty0 | | | P | 1 |
| tty1 | | | | |
| ⋮ | | | | |

## Customized Attribute — 540

| Key | AttName | Qualifier | AttType | AttValue |
|-----|---------|-----------|---------|----------|
| tty | baud | default | int | 9600 |
| tty | parity | default | char | even |

## CusDState — 550

| DName | ⋯⋯ | status | minor |
|-------|-----|--------|-------|
| hdisk0 | | | 0 |
| lp0 | | | 1 |
| tty0 | | | 0 |
| tty1 | | | 1 |
| ⋮ | | | |

## Generated DDS — 570

| DName | size | data |
|-------|------|------|
| hdisk0 | | |
| lp0 | | |
| tty0 | | |
| tty1 | | |
| ⋮ | | |

## CusDdriver — 560

| DD instance | major | maxuse | usecount | khandler |
|-------------|-------|--------|----------|----------|
| tty | 12 | 1248 | 12 | 34 |
| lp | 9 | 128 | 0 | 101 |
| hd | 5 | 64 | 2 | 3 |
| Vgi0 | 4 | 100 | 1 | 20 |
| Vgi1 | 6 | 100 | 2 | 149 |

FIG. 5

DEFINE METHOD

INVOKE DEFINE METHOD — 601

602

DOES CUSTOMIZED OBJECT EXIST ? — YES

61

NO

GET LOGICAL NAME FROM CUSTOMIZED — 603

RECEIVE DEVICE DESCRIPTION — 607

GET ATTRIBUTE NAME & VALUES FROM CALLER TO BE CHANGED — 604

EXTRACT ATTRIBUTES FROM PREDEFINED — 608

VALIDATE IF VALUES ARE WITHIN RANGE (CALL LOW-LEVEL ROUTINE) — 605

DERIVE UNIQUE ATTRIBUTES — 609

CHANGE ATTRIBUTES — 606

611

IS THERE A CONFLICT ? — YES

617

RE-SOLVE CONFLICT ? — NO

RETURN TO CALLER — 612

NO

YES

ADD TO CUSTOMIZED DATABASE — 614

RESOLVE CONFLICT — 613

SET STATUS FLAG TO DEFINE — 615

FIG. 6A

EP 0 398 644 A2

INVOKE CONFIGURE METHOD — 620

RECEIVE LOGICAL NAME OF DEVICE TO BE CONFIGURED — 621

CONFIGURE — 62

622
IS CUSTOMIZED OBJECT FOUND IN DATABASE ?

623 — METHOD FAILS ←NO

624 — RETURN ERROR CODE

YES

FIG. 6B

625
IS IT IN CONFIGURED STATE ?

YES →

626 — VERIFY IT IS CONFIGURED IN THE KERNEL

NO — 627

RETURN DEVICES THAT NEED TO BE CONFIGURED

628 — GET DDS STRUCTURE OF DEVICE TO BE CONFIGURED

629 — ASSIGN MAJOR & MINOR NUMBERS TO DEVICE DRIVER ASSOCIATED WITH THE DEVICE

630 — LOAD DEVICE DRIVER

631 — INITIALIZE

632 — SET STATUS FLAG TO CONFIGURED

633 — CREATE/DEV ENTRIES

634
OTHER DEVICES ATTACHED ?

NO → DONE

YES →

635 — DETERMINE WHICH DEVICES ARE ATTACHED

636 — INVOKE DEFINE METHODS TO DEFINE THE ATTACHED DEVICES

637 — RETURN LIST OF DEFINED DEVICES TO BE CONFIGURED TO CONFIGURATION MANAGER

START METHOD
63

| INVOKE START METHOD | 680 |

↓

| RECEIVE LOGICAL NAME OF DEVICE | 681 |

↓

682 — IS CUSTOMIZED DEVICE OBJECT FOUND ?

— YES → 684 — IS IT IN CONFIGURED STATE ? — YES → 686 SET STATUS FLAG TO STARTED

NO ↓

METHOD FAILS
683

NO ↓

METHOD FAILS
685

## FIG. 6C

STOP METHOD
64

| INVOKE STOP METHOD | 641 |

↓

| RECEIVE LOGICAL NAME OF DEVICE | 642 |

↓

643 — IS CUSTOMIZED DEVICE OBJECT FOUND ?

— YES → 645 — IS OBJECT IN START STATE ? — YES → 647 MAKE DEVICE UNAVAILABLE TO APPLICA- TIONS & SUB- SYSTEMS

NO ↓

METHOD FAILS
644

NO ↓

METHOD FAILS
646

↓ 648 SET STATUS FLAG TO CONFIGURED

## FIG. 6D

INVOKE UNCONFIG METHOD —— 651

RECEIVE LOGICAL NAME
PASSED OF DEVICE —— 652

653

IS
CUSTOMIZED
OBJECT FOUND
?

NO → METHOD FAILS —— 654

YES

655

IS
IT IN
CONFIGURED
STATE
?

NO → METHOD FAILS —— 656

YES

INVOKE SYSCONFIG SYSTEM CALL TO TERMINATE
DEVICE INSTANCE FROM DEVICE DRIVER —— 657

UNLOAD DEVICE DRIVER FROM KERNEL —— 658

RELEASE MINOR DEVICE NUMBER —— 659

REMOVE APPROPRIATE / DEV ENTRIES —— 660

661

IS
THIS LAST
DEVICE INSTANCE
FOR THE DEVICE
DRIVER

NO → SET STATUS
FLAG
TO DEFINED —— 664

YES

RELEASE MAJOR NUMBER —— 662

REMOVE ALL SPECIAL FILES IN /DEV —— 663

UNCONFIGURE METHOD
—— 65

FIG. 6E

INVOKE UNDEFINE METHOD ⌐670

RECEIVE LOGICAL NAME ⌐671

UNDEFINE METHOD
⌐66

672

IS CUSTOMIZED OBJECT FOUND ?  — NO

YES

METHOD FAILS

673

RETURN ERROR CODE
674

675

IS IT IN DEFINED STATE ?  — NO

YES

676

DELETE DEVICES FROM CUSTOMIZED OBJECT CLASS

FIG. 6F

70

## Configuration rule objects:

| Rule type | Rule value | phase |
|-----------|-----------|-------|
| Sequence | system, lvm | 1 |
| Load NVRAM | yes | 1 |
| Merge | yes | 2 |
| Sequence | rootvg, system, lvm, vg, hft, . . | 2 |
| Verify | Lpp, diagnostics | 2 |

FIG. 7

DEVICE STATUS STATE TRANSITION DIAGRAM

FIG. 8